# EUROPEAN PATENT APPLICATION

(11) **EP 4 845 078 A1**
(43) Date of publication of application: **25.11.2026**
(21) Application number: 24918340.1
(22) Date of filing: 24.12.2024
(51) Int. Cl.: H04L 5/00, H04W 72/231

(54) **TRANSMISSION CONFIGURATION INDICATOR (TCI) PROCESSING METHOD AND APPARATUS, AND STORAGE MEDIUM**

(30) Priority: 16.01.2024 CN 202410065467
(71) Applicant: Datang Mobile Communications Equipment Co., Ltd., Beijing 100085 (CN)
(72) Inventor: ZHANG, Bufang, Beijing 100085 (CN); XU, Meng, Beijing 100085 (CN); ZHOU, Rui, Beijing 100085 (CN)
(74) Representative: Studio Torta S.p.A.
(86) International application number: PCT/CN2024/142038
(87) International publication number: WO 2025/152732

(57) **Abstract**

The present disclosure provides a transmission configuration indicator TCI processing method and apparatus, and a storage medium, relating to the field of communication technologies. In the present disclosure, a medium access control control element MAC CE is sent to a terminal device UE, the MAC CE is configured to explicitly or implicitly activate or deactivate a TCI of a candidate cell; where an explicit manner adopted includes: the MAC CE carrying indication information for activating or deactivating a TCI of a target candidate cell; an implicit manner adopted includes: activation or deactivation of a TCI of a target candidate cell according to a predefined MAC CE; or the MAC CE carrying cell identification information of at least one candidate cell to activate a TCI of the at least one candidate cell. The present disclosure can solve the technical problems of additional requirements on UE performance and extra power consumption of a network device caused by the failure to support deactivation of TCIs of candidate cells.

## Description

The present disclosure claims priority to Chinese Patent Application No. 202410065467.8, filed with the China National Intellectual Property Administration on January 16, 2024, and titled "TRANSMISSION CONFIGURATION INDICATOR TCI PROCESSING METHOD, APPARATUS, AND STORAGE MEDIUM", which is incorporated by reference in its entirety.

### TECHNICAL FIELD

The present disclosure relates to the field of communication technologies, in particular to a TCI processing method and apparatus, and a storage medium.

### BACKGROUND

In R18 L1/L2 triggered mobility (L1/L2 Triggered Mobility, abbreviated as LTM, where L1 refers to Layer 1 and L2 refers to Layer 2), to further reduce the LTM handover delay, it is considered to dynamically activate/deactivate transmission configuration indicators (Transmission Configuration Indicator, abbreviated as TCI) of several target candidate cells in advance according to L1 measurement results. Thus, when a target candidate cell is selected as a target cell by a network side and carried in an LTM handover command, user equipment (User Equipment, abbreviated as UE) does not need to perform tracking, measurement, power control and other processing on a reference signal (Reference Signal, abbreviated as RS) associated with the TCI again, thereby reducing the interruption delay. However, considering the transient nature of the L1 measurement results, beams of a currently activated candidate cell may become unavailable subsequently, and the network side needs to deactivate some or all beams of the candidate cell.

### SUMMARY

The present disclosure provides a TCI processing method and apparatus, and a storage medium, which solves the technical problem of additional requirements on UE performance and extra power consumption of a network device caused by the failure to support deactivation of TCIs of candidate cells.

In a first aspect, the present disclosure provides a TCI processing method, applied to a network device, the TCI processing method includes: sending a medium access control control element MAC CE to a terminal device, where the MAC CE is configured to explicitly or implicitly activate or deactivate a transmission configuration indicator TCI of a candidate cell; where an explicit manner adopted includes: the MAC CE carrying indication information for activating or deactivating a TCI of a target candidate cell; an implicit manner adopted includes: activation or deactivation of a TCI of a target candidate cell according to a predefined MAC CE; or, the MAC CE carrying cell identification information of at least one candidate cell to activate a TCI of the at least one candidate cell.

In some embodiments, the indication information corresponds to the target candidate cell, and the indication information is used to indicate activation or deactivation of all TCIs for the target candidate cell in the MAC CE; or, the indication information corresponds to a TCI codepoint, and the indication information is used to indicate that a state of the TCI codepoint corresponding to the indication information is an activated state or a deactivated state.

In some embodiments, when the indication information corresponds to the target candidate cell, the indication information is carried in a spare bit of the MAC CE; when the indication information corresponds to the TCI codepoint, the indication information is carried in N consecutive spare bits in the MAC CE, and a value of N depends on the number of TCI codepoints indicated in the MAC CE.

In some embodiments, types of the TCI codepoint include an uplink TCI codepoint, a downlink TCI codepoint or a joint TCI codepoint.

In some embodiments, an occurrence sequence of the indication information in the N consecutive spare bits in the MAC CE is consistent with an occurrence sequence of a corresponding uplink TCI codepoint, downlink TCI codepoint or joint TCI codepoint.

In some embodiments, a value of the indication information for activation is different from a value of the indication information for deactivation.

In some embodiments, the predefined MAC CE includes: a subheader of the MAC CE indicating that a length of the MAC CE is a predefined length, and the length of the MAC CE correspondingly being the predefined length.

In some embodiments, the predefined length is 2 octets or 1 octet.

In some embodiments, when the MAC CE does not include information of a TCI state identifier, the MAC CE is configured to deactivate all TCIs for the target candidate cell in the MAC CE.

In some embodiments, when carrying the cell identification information of the at least one candidate cell, the MAC CE further includes at least one of the following: at least one TCI codepoint corresponding to cell identification information of each candidate cell, where one TCI codepoint corresponds to information of one uplink TCI state identifier, information of one downlink TCI state identifier, or information of one joint TCI state identifier; information of a TCI state identifier corresponding to a TCI codepoint carried in an independent control field, where the information of a state identifier indicates the number of TCIs corresponding to the TCI codepoint or a TCI mode corresponding to the TCI codepoint, and the TCI mode includes a joint uplink-downlink mode or a separate uplink-downlink mode; information of a TCI state identifier corresponding to a TCI codepoint carried in an independent indication field when a state of an uplink TCI and a state of a downlink TCI are separately indicated, where the information of a state identifier is information of an uplink TCI state identifier or information of a downlink TCI state identifier.

In a second aspect, the present disclosure provides a TCI processing method, applied to a terminal device, the TCI processing method includes: receiving an MAC CE from a network device, where the MAC CE is configured to explicitly or implicitly activate or deactivate a TCI of a candidate cell; performing activation or deactivation of the TCI of the candidate cell according to the MAC CE; where an explicit manner adopted includes: the MAC CE carrying indication information for activating or deactivating a TCI of a target candidate cell; an implicit manner adopted includes: activation or deactivation of a TCI of a target candidate cell according to a predefined MAC CE; or, the MAC CE carrying cell identification information of at least one candidate cell to activate a TCI of the at least one candidate cell.

In some embodiments, the indication information corresponds to the target candidate cell, the indication information corresponds to the target candidate cell, and the indication information is used to indicate activation or deactivation of all TCIs for the target candidate cell in the MAC CE, or the indication information is used to indicate activation or deactivation of a TCI corresponding to TCI identification information carried in the MAC CE for the target candidate cell.

In some embodiments, the indication information corresponds to a TCI codepoint, and the indication information is used to indicate activation or deactivation of a TCI corresponding to the TCI codepoint.

In some embodiments, types of the TCI codepoint include an uplink TCI codepoint, a downlink TCI codepoint or a joint TCI codepoint.

In some embodiments, when the indication information corresponds to the TCI codepoint, the indication information is carried in N consecutive spare bits in the MAC CE; where a value of N depends on the number of TCI codepoints indicated in the MAC CE; or a maximum value of N is 8 or 16.

In some embodiments, an occurrence sequence of the indication information in the N consecutive spare bits in the MAC CE is consistent with an occurrence sequence of a corresponding uplink TCI codepoint, downlink TCI codepoint or joint TCI codepoint, and the indication information is used to indicate that a state of the TCI codepoint corresponding to the indication information is an activated state or a deactivated state.

In some embodiments, a value of the indication information for activation is different from a value of the indication information for deactivation.

In some embodiments, the predefined MAC CE includes: a subheader of the MAC CE indicating that a length of the MAC CE is a predefined length, and the length of the MAC CE correspondingly being the predefined length.

In some embodiments, the predefined length is 2 octets or 1 octet.

In some embodiments, when the MAC CE does not include information of a TCI state identifier, the MAC CE is configured to deactivate all TCIs for the target candidate cell in the MAC CE.

In some embodiments, when the MAC CE only includes identification information of a logical channel, the MAC CE is configured to deactivate a TCI of the candidate cell corresponding to the identification information of the logical channel.

In some embodiments, when carrying the cell identification information of the at least one candidate cell, the MAC CE further includes at least one of the following: at least one TCI codepoint corresponding to cell identification information of each candidate cell, where one TCI codepoint corresponds to information of one uplink TCI state identifier, information of one downlink TCI state identifier, or information of one joint TCI state identifier; information of a TCI state identifier corresponding to a TCI codepoint carried in an independent control field, where the information of a state identifier indicates the number of TCIs corresponding to the TCI codepoint or a TCI mode corresponding to the TCI codepoint, and the TCI mode includes a joint uplink-downlink mode or a separate uplink-downlink mode; information of a TCI state identifier corresponding to a TCI codepoint carried in an independent indication field when a state of an uplink TCI and a state of a downlink TCI are separately indicated, where the information of a state identifier is information of an uplink TCI state identifier or information of a downlink TCI state identifier.

In some embodiments, a state of a TCI corresponding to cell identification information carried in an MAC CE received at a first time is an activated state, and the first time is the latest time at which the MAC CE is received.

In some embodiments, if an MAC CE is received at a second time, and cell identification information carried in the MAC CE is not included in the cell identification information carried in the MAC CE received at the first time, then a state of a TCI corresponding to the cell identification information carried in the MAC CE received at the second time is a deactivated state, where the second time is earlier than the first time; and/or, if cell identification information carried in an MAC CE received at a second time is identical to the cell identification information carried in the MAC CE received at the first time, and TCIs corresponding to the same cell identification information are identical, then a state of the same TCIs corresponding to the same cell identification information is an activated state.

In a third aspect, the present disclosure provides a TCI processing apparatus, applied to a network device, the TCI processing apparatus includes: a sending module, configured to send an MAC CE to a terminal device, where the MAC CE is configured to explicitly or implicitly activate or deactivate a TCI of a candidate cell; where an explicit manner adopted includes: the MAC CE carrying indication information for activating or deactivating a TCI of a target candidate cell; an implicit manner adopted includes: activation or deactivation of a TCI of a target candidate cell according to a predefined MAC CE; or, the MAC CE carrying cell identification information of at least one candidate cell to activate a TCI of the at least one candidate cell.

In a fourth aspect, the present disclosure provides a TCI processing apparatus applied to a terminal device, the TCI processing apparatus includes: a receiving module, configured to receive an MAC CE from a network device, where the MAC CE is configured to explicitly or implicitly activate or deactivate a TCI of a candidate cell; a processing module, configured to perform activation or deactivation of the TCI of the candidate cell according to the MAC CE; where an explicit manner adopted includes: the MAC CE carrying indication information for activating or deactivating a TCI of a target candidate cell; an implicit manner adopted includes: activation or deactivation of a TCI of a target candidate cell according to a predefined MAC CE; or, the MAC CE carrying cell identification information of at least one candidate cell to activate a TCI of the at least one candidate cell.

In a fifth aspect, the present disclosure further provides a TCI processing device, including: a memory, a transceiver and a processor: the memory, configured to store a computer program; the transceiver, configured to transceive data under the control of the processor; the processor, configured to read the computer program in the memory and perform the following operations: send an MAC CE to a terminal device, where the MAC CE is configured to explicitly or implicitly activate or deactivate a TCI of a candidate cell; where an explicit manner adopted includes: the MAC CE carrying indication information for activating or deactivating a TCI of a target candidate cell; an implicit manner adopted includes: activation or deactivation of a TCI of a target candidate cell according to a predefined MAC CE; or, the MAC CE carrying cell identification information of at least one candidate cell to activate a TCI of the at least one candidate cell.

In some embodiments, the indication information corresponds to the target candidate cell, and the indication information is used to indicate activation or deactivation of all TCIs for the target candidate cell in the MAC CE; or, the indication information corresponds to a TCI codepoint, and the indication information is used to indicate that a state of the TCI codepoint corresponding to the indication information is an activated state or a deactivated state.

In some embodiments, when the indication information corresponds to the target candidate cell, the indication information is carried in a spare bit of the MAC CE; when the indication information corresponds to the TCI codepoint, the indication information is carried in N consecutive spare bits in the MAC CE, and a value of N depends on the number of TCI codepoints indicated in the MAC CE.

In some embodiments, types of the TCI codepoint include an uplink TCI codepoint, a downlink TCI codepoint or a joint TCI codepoint.

In some embodiments, an occurrence sequence of the indication information in the N consecutive spare bits in the MAC CE is consistent with an occurrence sequence of a corresponding uplink TCI codepoint, downlink TCI codepoint or joint TCI codepoint.

In some embodiments, a value of the indication information for activation is different from a value of the indication information for deactivation.

In some embodiments, the predefined MAC CE includes: a subheader of the MAC CE indicating that a length of the MAC CE is a predefined length, and the length of the MAC CE correspondingly being the predefined length.

In some embodiments, the predefined length is 2 octets or 1 octet.

In some embodiments, when the MAC CE does not include information of a TCI state identifier, the MAC CE is configured to deactivate all TCIs for the target candidate cell in the MAC CE.

In some embodiments, when carrying the cell identification information of the at least one candidate cell, the MAC CE further includes at least one of the following: at least one TCI codepoint corresponding to cell identification information of each candidate cell, where one TCI codepoint corresponds to information of one uplink TCI state identifier, information of one downlink TCI state identifier, or information of one joint TCI state identifier; information of a TCI state identifier corresponding to a TCI codepoint carried in an independent control field, where the information of a state identifier indicates the number of TCIs corresponding to the TCI codepoint or a TCI mode corresponding to the TCI codepoint, and the TCI mode includes a joint uplink-downlink mode or a separate uplink-downlink mode; information of a TCI state identifier corresponding to a TCI codepoint carried in an independent indication field when a state of an uplink TCI and a state of a downlink TCI are separately indicated, where the information of a state identifier is information of an uplink TCI state identifier or information of a downlink TCI state identifier.

In a sixth aspect, the present disclosure further provides a TCI processing device, including: a memory, a transceiver and a processor: the memory, configured to store a computer program; the transceiver, configured to transceive data under the control of the processor; the processor, configured to read the computer program in the memory and perform the following operations: receive an MAC CE from a network device, where the MAC CE is configured to explicitly or implicitly activate or deactivate a TCI of a candidate cell; perform activation or deactivation of the TCI of the candidate cell according to the MAC CE; where an explicit manner adopted includes: the MAC CE carrying indication information for activating or deactivating a TCI of a target candidate cell; an implicit manner adopted includes: activation or deactivation of a TCI of a target candidate cell according to a predefined MAC CE; or, the MAC CE carrying cell identification information of at least one candidate cell to activate a TCI of the at least one candidate cell.

In some embodiments, the indication information corresponds to the target candidate cell, the indication information corresponds to the target candidate cell, and the indication information is used to indicate activation or deactivation of all TCIs for the target candidate cell in the MAC CE, or the indication information is used to indicate activation or deactivation of a TCI corresponding to TCI identification information carried in the MAC CE for the target candidate cell.

In some embodiments, the indication information corresponds to a TCI codepoint, and the indication information is used to indicate activation or deactivation of a TCI corresponding to the TCI codepoint.

In some embodiments, types of the TCI codepoint include an uplink TCI codepoint, a downlink TCI codepoint or a joint TCI codepoint.

In some embodiments, when the indication information corresponds to the TCI codepoint, the indication information is carried in N consecutive spare bits in the MAC CE; where a value of N depends on the number of TCI codepoints indicated in the MAC CE; or a maximum value of N is 8 or 16.

In some embodiments, an occurrence sequence of the indication information in the N consecutive spare bits in the MAC CE is consistent with an occurrence sequence of a corresponding uplink TCI codepoint, downlink TCI codepoint or joint TCI codepoint, and the indication information is used to indicate that a state of the TCI codepoint corresponding to the indication information is an activated state or a deactivated state.

In some embodiments, a value of the indication information for activation is different from a value of the indication information for deactivation.

In some embodiments, the predefined MAC CE includes: a subheader of the MAC CE indicating that a length of the MAC CE is a predefined length, and the length of the MAC CE correspondingly being the predefined length.

In some embodiments, the predefined length is 2 octets or 1 octet.

In some embodiments, when the MAC CE does not include information of a TCI state identifier, the MAC CE is configured to deactivate all TCIs for the target candidate cell in the MAC CE.

In some embodiments, when the MAC CE only includes identification information of a logical channel, the MAC CE is configured to deactivate a TCI of the candidate cell corresponding to the identification information of the logical channel.

In some embodiments, when carrying the cell identification information of the at least one candidate cell, the MAC CE further includes at least one of the following: at least one TCI codepoint corresponding to cell identification information of each candidate cell, where one TCI codepoint corresponds to information of one uplink TCI state identifier, information of one downlink TCI state identifier, or information of one joint TCI state identifier; information of a TCI state identifier corresponding to a TCI codepoint carried in an independent control field, where the information of a state identifier indicates the number of TCIs corresponding to the TCI codepoint or a TCI mode corresponding to the TCI codepoint, and the TCI mode includes a joint uplink-downlink mode or a separate uplink-downlink mode; information of a TCI state identifier corresponding to a TCI codepoint carried in an independent indication field when a state of an uplink TCI and a state of a downlink TCI are separately indicated, where the information of a state identifier is information of an uplink TCI state identifier or information of a downlink TCI state identifier.

In some embodiments, a state of a TCI corresponding to cell identification information carried in an MAC CE received at a first time is an activated state, and the first time is the latest time at which the MAC CE is received.

In some embodiments, if an MAC CE is received at a second time, and cell identification information carried in the MAC CE is not included in the cell identification information carried in the MAC CE received at the first time, then a state of a TCI corresponding to the cell identification information carried in the MAC CE received at the second time is a deactivated state, where the second time is earlier than the first time; and/or, if cell identification information carried in an MAC CE received at a second time is identical to the cell identification information carried in the MAC CE received at the first time, and TCIs corresponding to the same cell identification information are identical, then a state of the same TCIs corresponding to the same cell identification information is an activated state.

In a seventh aspect, the present disclosure further provides a non-transitory readable storage medium storing a computer program, where the computer program enables a processor to implement the TCI processing methods.

The present disclosure provides a TCI processing method and apparatus, a device and a storage medium, the TCI processing method includes: sending an MAC CE to a terminal device, where the MAC CE is configured to explicitly or implicitly activate or deactivate a TCI of a candidate cell; where an explicit manner adopted includes: the MAC CE carrying indication information for activating or deactivating a TCI of a target candidate cell; an implicit manner adopted includes: activation or deactivation of a TCI of a target candidate cell according to a predefined MAC CE; or, the MAC CE carrying cell identification information of at least one candidate cell to activate a TCI of the at least one candidate cell. In the present disclosure, the MAC CE is configured to explicitly or implicitly activate or deactivate the TCI of the candidate cell. After the network device sends the MAC CE to the terminal device, the terminal device may dynamically activate or deactivate the TCI that appears in the MAC CE according to the MAC CE. In addition, the MAC CE may further carry no identification information of the candidate cell, and only carry identification information of a logical channel, so as to dynamically activate the TCI of the candidate cell corresponding to the identification information of the logical channel. Therefore, additional requirements on UE performance and extra power consumption of the network device can be reduced.

It should be understood that the contents described in the summary are not intended to limit the key or important features of the embodiments of the present disclosure, nor to limit the scope of the present disclosure. Other features of the present disclosure will be readily understood from the following description.

### BRIEF DESCRIPTION OF DRAWINGS

In order to illustrate the technical scheme of the present disclosure or the related art more clearly, the drawings needed to be used in the embodiments or the related art will be briefly introduced below. Obviously, the drawings in the following description are merely some embodiments of the present disclosure, and for those skilled in the art, other drawings can be obtained according to these drawings without creative efforts.
FIG. 1 is a schematic flowchart of a TCI processing method provided by an embodiment of the present disclosure.
FIG. 2 is a schematic diagram of an MAC CE provided by an embodiment of the present disclosure.
FIG. 3 is a schematic diagram of another MAC CE provided by an embodiment of the present disclosure.
FIG. 4 is a schematic diagram of a subheader of an MAC CE provided by an embodiment of the present disclosure.
FIG. 5 is a schematic diagram of an MAC CE of 2 octets provided by an embodiment of the present disclosure.
FIG. 6 is a schematic diagram of an MAC CE of 1 octet provided by an embodiment of the present disclosure.
FIG. 7 is a schematic diagram of another MAC CE provided by an embodiment of the present disclosure.
FIG. 8 is a schematic flowchart of another TCI processing method provided by an embodiment of the present disclosure.
FIG. 9 is a schematic flowchart of another TCI processing method provided by an embodiment of the present disclosure.
FIG. 10 is a schematic flowchart of yet another TCI processing method provided by an embodiment of the present disclosure.
FIG. 11 is a schematic flowchart of yet another TCI processing method provided by an embodiment of the present disclosure.
FIG. 12 is a schematic flowchart of yet another TCI processing method provided by an embodiment of the present disclosure.
FIG. 13 is a schematic flowchart of yet another TCI processing method provided by an embodiment of the present disclosure.
FIG. 14 is a schematic flowchart of yet another TCI processing method provided by an embodiment of the present disclosure.
FIG. 15 is a structural schematic diagram of a TCI processing apparatus provided by an embodiment of the present disclosure.
FIG. 16 is a structural schematic diagram of a TCI processing apparatus provided by an embodiment of the present disclosure.
FIG. 17 is a structural schematic diagram of a TCI processing device provided by an embodiment of the present disclosure.
FIG. 18 is a structural schematic diagram of a TCI processing device provided by an embodiment of the present disclosure.

### DESCRIPTION OF EMBODIMENTS

In the embodiments of the present disclosure, the term "and/or" describes an association relationship between associated objects and indicates that three relationships may exist. For example, A and/or B may represent the following three cases: A exists alone, both A and B exist, and B exists alone. The symbol "/" generally indicates an "or" relationship between the associated objects before and after it.

In the embodiments of the present disclosure, the term "plurality" means two or more, and other quantifiers are similar thereto.

The technical solutions in the embodiments of the present disclosure will be described clearly and completely in conjunction with the drawings in the embodiments. Obviously, the described embodiments are only part of the embodiments of the present disclosure, not all of them. Based on the embodiments in the present disclosure, all other embodiments obtained by a person of ordinary skill in the art without creative efforts shall fall within the scope of protection of the present disclosure.

The inventor found in research that R18 supports a cell change mechanism based on L1/L2 commands. The cell change mechanism based on L1/L2 commands aims to implement a faster procedure than that based on an L3 command. Meanwhile, the cell change mechanism based on L1/L2 commands is not limited to handover and primary secondary cell (Primary Secondary Cell, abbreviated as PSCell) change, and is also applicable to SCell. To support L1/L2 command based mobility, a serving cell (serving cell) pre-configures configuration information of a candidate cell (candidate cell) for the UE in advance via radio resource control (Radio Resource Control, abbreviated as RRC) messages. The UE performs an L1 measurement on a neighboring cell according to the received configuration and reports to the serving cell. The serving cell makes a handover decision according to the measurement report. Before this, the serving cell may further trigger the UE to perform timing advance (Timing Advance, abbreviated as TA) acquisition for the target cell to acquire TA in advance. The acquired valid TA value is carried in an L1/L2 cell change command for the UE, so as to implement a RACH-less cell change procedure and reduce interruption delay.

In R18 LTM, to further reduce the LTM handover delay, it is considered to dynamically activate/deactivate TCIs of several candidate cells in advance according to L1 measurement results. Thus, when the candidate cell is selected as a target cell by a network device and carried in an LTM handover command, the UE does not need to perform tracking, measurement, power control and other processing on a RS associated with the TCI again, thereby reducing the interruption delay. However, considering the transient nature of the L1 measurement results, beams of a currently activated candidate cell may become unavailable subsequently, and the network device needs to deactivate some or all beams of the candidate cell. Nevertheless, under the current mechanism, for a given candidate cell, activation of the TCI of the candidate cell is supported, but deactivation of all TCI states under the candidate cell is not supported. This means that even if the candidate cell is not suitable as the target cell, the UE still has to measure at least one TCI reference signal of the candidate cell, thereby leading to additional requirements on UE performance and extra power consumption for network devices.

Embodiments of the present disclosure provide a TCI processing method and apparatus, and a storage medium. A network device can send a medium access control (Medium Access Control, abbreviated as MAC) control element (Control Element, abbreviated as CE) configured to explicitly or implicitly activate or deactivate a TCI of a candidate cell to a terminal device. An explicit manner adopted includes: the MAC CE carrying indication information for activating or deactivating a TCI of a target candidate cell. An implicit manner adopted includes: activation or deactivation of a TCI of a target candidate cell according to a predefined MAC CE; or the MAC CE carrying cell identification information of at least one candidate cell to activate a TCI of the at least one candidate cell. In this way, after receiving the MAC CE, the terminal device may dynamically activate or deactivate a TCI present in the MAC CE according to the MAC CE. In addition, the MAC CE may further carry no identification information of the candidate cell, and only carry identification information of a logical channel, so as to dynamically activate the TCI of the candidate cell corresponding to the identification information of the logical channel. Therefore, additional requirements on UE performance and extra power consumption of the network device can be reduced.

The method and the apparatus are based on the same application concept. Since they adopt the same principle, reference may be made mutually between the implementations of the method and the apparatus, and repeated description will be omitted.

The technical solutions provided by the embodiments of the present disclosure may be applicable to multiple systems. For example, applicable systems may include a long term evolution (Long Term Evolution, abbreviated as LTE) system, an LTE frequency division duplex (Frequency Division Duplex, abbreviated as FDD) system, an LTE time division duplex (Time Division Duplex, abbreviated as TDD) system, a long term evolution advanced (Long Term Evolution Advanced, abbreviated as LTE-A) system, a universal mobile telecommunication system (Universal Mobile Telecommunication System, abbreviated as UMTS), a worldwide interoperability for microwave access (Worldwide Interoperability For Microwave Access, abbreviated as WiMAX) system, a 5G new radio (New Radio, abbreviated as NR) system, and evolved communication systems thereof. Terminal devices and network devices may be included in the multiple systems. The system may further include a core network part, such as an evolved packet system (Evloved Packet System, abbreviated as EPS) and a 5G system (5GS).

A terminal device involved in the embodiments of the present disclosure may be a device that provides voice and/or data connectivity for users, a handheld device with a wireless connection function, or other processing devices connected to wireless modems. In different systems, the names of terminal devices may vary. For example, in a 5G system, the terminal device may be referred to as a UE. A wireless terminal device may be a USB storage device, other personal computer memory devices or a security dongle, and may communicate with one or more core networks (Core Network, abbreviated as CN) via a radio access network (Radio Access Network, abbreviated as RAN). The wireless terminal device may be a mobile terminal device, such as a mobile phone (or referred to as a "cellular" phone) or a computer equipped with a mobile terminal. For example, it may be a portable, pocket-sized, handheld, computer-built-in or vehicle-mounted mobile device, which exchanges voice and/or data with the radio access network. Examples thereof include a personal communication service (Personal Communication Service, abbreviated as PCS) phone, a cordless phone, a session initiation protocol (Session Initiation Protocol, abbreviated as SIP) phone, a wireless local loop (Wireless Local Loop, abbreviated as WLL) station, a personal digital assistant (Personal Digital Assistant, abbreviated as PDA), a personal computer, a tablet computer, and a machine-type communication (Machine-type Communication, abbreviated as MTC) terminal device. The wireless terminal device may also be called a system, a subscriber unit (subscriber unit), a subscriber station (subscriber station), a mobile station (mobile station), a mobile (mobile), a remote station (remote station), an access point (access point), a remote terminal (remote terminal), an access terminal (access terminal), a user terminal (user terminal), a user agent (user agent), or a user device (user device), as well as a wireless access device, a router, a modem or the like that meet the limitations of the foregoing definition, which are not limited in the embodiments of the present disclosure.

A network device involved in the embodiments of the present disclosure may be a base station, which may include multiple cells serving terminals. Depending on the different specific application, the base station may also be called an access point, or may be a device in an access network that communicates with the wireless terminal device over one or more sectors on an air interface, or adopt other names. The network device may be configured to mutually convert received air frames and internet protocol (Internet Protocol, abbreviated as IP) packets, and serve as a router between the wireless terminal device and the rest of the access network, where the rest of the access network may include an internet protocol (IP) communication network. The network device may also coordinate the attribute management of the air interface. For example, the network device involved in the embodiments of the present disclosure may be an evolutional Node B (evolutional Node B, abbreviated as eNB or e-NodeB) in an LTE system, a 5G base station (gNB) in a 5G network architecture (next generation system), and the like, and may also be a home evolved node B (Home evolved Node B, HeNB), a relay node (relay node), a home base station (femto), a pico base station (pico), a network test device, etc., which is not limited in the embodiments of the present disclosure. In some network architectures, the network device may include a centralized unit (Centralized Unit, abbreviated as CU) node and a distributed unit (Distributed Unit, abbreviated as DU) node, and the centralized unit and the distributed unit may also be arranged separately in geography.

The network device and the terminal device can each employ one or more antennas for Multiple-Input Multiple-Output MIMO transmission, the MIMO transmission can be single-user MIMO or multi-user MIMO. The MIMO transmission can be 2D-MIMO, 3D-MIMO, FD-MIMO or massive MIMO, or adopt diversity transmission, precoding transmission or beamforming transmission, depending on the form and number of multi-antenna combinations.

In the embodiments of the present disclosure, the description that a terminal device sends relevant information to a network device or similar expressions merely indicate that the terminal device transmits the relevant information in the form of a wireless signal, with the network device as an intended recipient. The network device may obtain the relevant information by receiving the wireless signal.

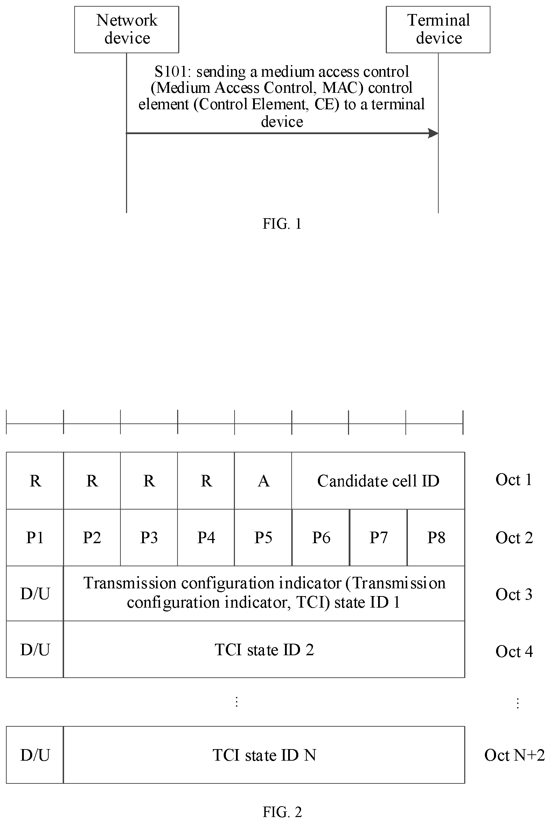

In some embodiments, a TCI processing method is provided, which is applied to a network device. FIG. 1 is a schematic flowchart of a TCI processing method provided by an embodiment of the present disclosure. As shown in FIG. 1, the method mainly includes the following steps.

S101: sending an MAC CE to a terminal device.

In this step, the MAC CE is configured to explicitly or implicitly activate or deactivate a TCI of a candidate cell.

In the TCI processing method provided by the embodiments of the present disclosure, the MAC CE is configured to explicitly or implicitly activate or deactivate the TCI of the candidate cell. After the network device sends the MAC CE to the terminal device, the terminal device may dynamically activate or deactivate the TCI that appears in the MAC CE according to the MAC CE, thereby reducing additional requirements on UE performance and extra power consumption of the network device.

In some embodiments, an explicit manner adopted includes: carrying, in the MAC CE, indication information for activating a TCI of a target candidate cell.

Optionally, the MAC CE sent by the network device to the terminal device carries the indication information for activating the TCI of the target candidate cell. After receiving the MAC CE, the terminal device can activate the TCI for the target candidate cell in the MAC CE according to the indication information.

In some embodiments, an explicit manner adopted includes: carrying, in the MAC CE, indication information for deactivating a TCI of a target candidate cell.

Optionally, the MAC CE sent by the network device to the terminal device carries the indication information for deactivating the TCI of the target candidate cell. After receiving the MAC CE, the terminal device can deactivate the TCI for the target candidate cell in the MAC CE according to the indication information.

For example, if the indication information corresponds to the target candidate cell, when a value of the indication information is 0, the terminal device considers all TCIs for the target candidate cell that appear in the MAC CE to be in a deactivated state, and thus deactivates all TCIs that appear in the MAC CE. When the value of the indication information is 1, the terminal device considers all TCIs for the target candidate cell that appear in the MAC CE to be in an activated state, and thus activates all TCIs that appear in the MAC CE.

For another example, if the indication information corresponds to a TCI codepoint, when a value of the indication information is 0, the terminal device considers a TCI corresponding to the TCI codepoint to be in a deactivated state, and thus deactivates the TCI corresponding to the TCI codepoint. When the value of the indication information is 1, the terminal device considers the TCI corresponding to the TCI codepoint to be in an activated state, and thus activates the TCI corresponding to the TCI codepoint.

In some embodiments, an implicit manner adopted includes: activation of the TCI of the target candidate cell according to a predefined MAC CE.

Optionally, the network device sends the MAC CE to the terminal device. When determining that MAC CE is the predefined MAC CE, the terminal device activates the TCI for the target candidate cell in the MAC CE.

For example, a protocol between the network device and the terminal device may stipulate that an MAC CE of a predefined length is configured to indicate the activation of the TCI for the target candidate cell in this MAC CE. After receiving the MAC CE, the terminal device activates the TCI for the target candidate cell in the MAC CE when a subheader of the MAC CE indicates that a length of the MAC CE is a predefined length and the length of the MAC CE matches the predefined length. If the subheader of the MAC CE indicates that the length of the MAC CE is the predefined length, but the length of the MAC CE is not the predefined length, activation of the TCI for the target candidate cell in the MAC CE is not performed.

In some embodiments, an implicit manner adopted includes: deactivation of the TCI of the target candidate cell according to a predefined MAC CE.

Optionally, the network device sends the MAC CE to the terminal device. When determining that MAC CE is the predefined MAC CE, the terminal device deactivates the TCI for the target candidate cell in the MAC CE.

For example, a protocol between the network device and the terminal device may stipulate that an MAC CE of a predefined length is configured to indicate the deactivation of the TCI for the target candidate cell in this MAC CE. After receiving the MAC CE, the terminal device deactivates the TCI for the target candidate cell in the MAC CE when a subheader of the MAC CE indicates that a length of the MAC CE is a predefined length and the length of the MAC CE matches the predefined length. If the subheader of the MAC CE indicates that the length of the MAC CE is the predefined length, but the length of the MAC CE is not the predefined length, deactivation of the TCI for the target candidate cell in the MAC CE is not performed.

For another example, if the MAC CE does not include information of a TCI state identifier, after receiving the MAC CE, the terminal device deactivates all TCIs for the target candidate cell in the MAC CE.

In some embodiments, an implicit manner adopted includes: the MAC CE carrying cell identification information of at least one candidate cell to activate a TCI of the at least one candidate cell.

Optionally, the MAC CE sent by the network device to the terminal device carries the cell identification information of the at least one candidate cell, and the terminal device can activate the TCI of the at least one candidate cell upon receiving the MAC CE.

For example, due to factors such as occlusion and movement of the terminal device, it is necessary to switch the target cell and beam to ensure good signal quality of an SSB corresponding to the TCI. Therefore, the network device monitors in real-time whether the TCI(s) corresponding to one or more candidate cells in the MAC CE sent to the terminal device is appropriate. If inappropriate, the network device needs to send a new MAC CE to the terminal device. Accordingly, the terminal device may take the most recently received MAC CE as the basis, and activate a TCI corresponding to cell identification information carried in the most recently received MAC CE.

When the terminal device receives MAC CEs twice, each received MAC CE carries the cell identification information of at least one candidate cell, then the terminal device takes the most recently received MAC CE as the basis, and activates a TCI of at least one candidate cell corresponding to the most recently received MAC CE. If the terminal device receives an MAC CE at a second time, and cell identification information carried in the MAC CE received at the second time is not included in cell identification information carried in the MAC CE received at a first time (the latest time at which the MAC CE is received), it is considered that the TCI(s) corresponding to one or more candidate cells in the MAC CE received at the second time are all inappropriate. Therefore, with the most recently received MAC CE as the basis, the TCI corresponding to the cell identification information carried in the most recently received MAC CE is activated, and the TCI corresponding to the cell identification information carried in the MAC CE received at the second time is deactivated. If the cell identification information carried in the MAC CE received at the second time is identical to the cell identification information carried in the MAC CE received at the first time, and TCIs corresponding to the same cell identification information are identical, it is considered that only the TCIs corresponding to part of the candidate cells in the MAC CE received at the second time are appropriate. Therefore, with the most recently received MAC CE as the basis, the TCI corresponding to the cell identification information carried in the most recently received MAC CE is activated, the state of the same TCI corresponding to the same cell identification information in the MAC CE received at the second time is ensured to be the activated state, and the TCI corresponding to different cell identification information carried in the MAC CE received at the second time is accordingly deactivated.

Optionally, when the MAC CE carries the indication information for activating or deactivating the TCI of the target candidate cell, or when the MAC CE is the predefined MAC CE, the MAC CE is an LTM early TCI activation/deactivation MAC CE, and the LTM early TCI activation/deactivation MAC CE refers to a current per candidate activation MAC CE.

In an optional implementation, the current per candidate activation MAC CE may carry a Candidate cell ID field (Candidate Cell ID) corresponding to cell identification information of at most one candidate cell, a Pi field corresponding to a codepoint (codepoint), a D/U field, a TCI state ID field (TCI state ID) corresponding to information of a TCI state identifier, and an R field corresponding to a spare bit.

The Candidate cell ID field: used to indicate the cell identification information of the candidate cell in the MAC CE, and a field length of the Candidate cell ID field is 3 bits.

The Pi field: used to indicate whether each TCI codepoint has multiple TCI states or a single TCI state. If the Pi field is set to 1, the i-th TCI codepoint has an uplink (Uplink) TCI state and a downlink (Downlink) TCI state. If the Pi field is set to 0, the i-th TCI codepoint only includes a downlink/joint TCI state or an uplink TCI state. The codepoint corresponding to the TCI state is determined by its order in all TCI state ID fields.

The D/U field (Downlink/Uplink): used to indicate whether the TCI state ID field in the same octet is applicable to the downlink/joint TCI state, or to the uplink TCI state. If the D/U field is set to 1, the TCI state ID field in the same octet is applicable to downlink/joint TCI state. If the D/U field is set to 0, the TCI state ID field in the same octet is applicable to the uplink TCI state.

The TCI state ID field: used to indicate information of a TCI state identifier, which may also be referred to as information of a TCI state identifier. If the D/U field is set to 1, a TCI state ID with a length of 7 bits is adopted. If the D/U field is set to 0, the most significant bit of the TCI state ID is regarded as a spare bit. A maximum number of activated TCI states is 16.

The R field is set to: 0.

In some embodiments, the indication information corresponds to the target candidate cell, and the indication information is used to indicate activation of all TCIs for the target candidate cell in the MAC CE.

In this embodiment, the indication information may be indicated on a per candidate cell (per candidate cell) basis. One MAC CE carries only cell identification information of one candidate cell. Therefore, the indication information carried in the MAC CE sent by the network device may correspond to the candidate cell corresponding to the MAC CE, i.e., the target candidate cell, and all TCIs that appear in the MAC CE are TCIs of the target candidate cell. The indication information may be used to indicate activation of all TCIs that appear in the MAC CE. After receiving the MAC CE, the terminal device may activate all TCIs that appear in the MAC CE directly according to the indication information.

In some embodiments, the indication information corresponds to the target candidate cell, and the indication information is used to indicate deactivation of all TCIs for the target candidate cell in the MAC CE.

In this embodiment, the indication information may be indicated on a per candidate cell (per candidate cell) basis. One MAC CE carries only cell identification information of one candidate cell. Therefore, the indication information carried in the MAC CE sent by the network device may correspond to the candidate cell corresponding to the MAC CE, i.e., the target candidate cell, and all TCIs that appear in the MAC CE are TCIs of the target candidate cell. The indication information may be used to indicate deactivation of all TCIs that appear in the MAC CE. After receiving the MAC CE, the terminal device may deactivate all TCIs that appear in the MAC CE directly according to the indication information.

In some embodiments, when the indication information corresponds to the target candidate cell, the indication information is carried in a spare bit of the MAC CE.

In this embodiment, if the indication information corresponds to the target candidate cell, a certain spare bit in the MAC CE may be adopted to carry the indication information. After receiving the MAC CE, the terminal device determines to activate or deactivate all TCIs for the target candidate cell that appear in the MAC CE according to the indication information carried by the spare bit. The MAC CE may be as shown in FIG. 2.

FIG. 2 is a schematic diagram of an MAC CE provided by an embodiment of the present disclosure. In FIG. 2, the first octet in the MAC CE includes fields corresponding to spare bits and a Candidate cell ID field, where the spare bit corresponding to a field A is used to carry the indication information. The second octet includes a Pi field (denoted as P1, P2, ..., P8 in FIG. 2) corresponding to the TCI codepoint. Each octet from the third octet to the last octet includes a D/U field and a TCI state ID field (denoted as TCI state ID 1, TCI state ID 2, ..., TCI state ID N in FIG. 2). After the terminal device receives the MAC CE, if the indication information carried in the field A is used to indicate activation of all TCIs that appear in the MAC CE, the terminal device activates all TCIs that appear in the MAC CE; if the indication information carried in the field A is used to indicate deactivation of all TCIs that appear in the MAC CE, the terminal device deactivates all TCIs that appear in the MAC CE.

Optionally, a value of the indication information for activation is different from a value of the indication information for deactivation. For example, if the value of the indication information carried by the spare bit corresponding to the field A is 0, the terminal device considers all TCIs for the target candidate cell that appear in the MAC CE to be in the deactivated state, and accordingly deactivates all TCIs that appear in the MAC CE. If the value of the indication information carried by the spare bit corresponding to the field A is 1, the terminal device considers all TCIs for the target candidate cell that appear in the MAC CE to be in the activated state, and accordingly activates all TCIs that appear in the MAC CE.

In some embodiments, the indication information corresponds to a TCI codepoint, and the indication information is used to indicate that a state of the TCI codepoint corresponding to the indication information is an activated state or a deactivated state.

In this embodiment, the indication information may also be indicated on a per TCI codepoint (per TCI codepoint) basis. In this way, the indication information corresponding to each TCI codepoint can indicate whether the state of the TCI codepoint is an activated state or a deactivated state, so as to determine whether to activate or deactivate the corresponding TCI.

Optionally, with the indication information carried in the MAC CE, dynamic activation or deactivation of the TCI for the target candidate cell in the MAC CE can be realized. Therefore, the additional requirements on UE performance and extra power consumption of the network device can be reduced.

In some embodiments, when the indication information corresponds to the TCI codepoint, the indication information is carried in N consecutive spare bits in the MAC CE, and a value of N depends on the number of TCI codepoints indicated in the MAC CE.

In this embodiment, if the indication information corresponds to the TCI codepoint, a new octet can be added in the MAC CE, and the indication information is carried by N consecutive spare bits in the newly added octet. A value of N depends on the number of TCI codepoints indicated in the MAC CE. For example, if the number of TCI codepoints indicated in the MAC CE is 8, then N is equal to 8. After receiving the MAC CE, the terminal device determines whether the state of the TCI codepoint corresponding to each indication information is an activated state or a deactivated state according to the indication information carried by the N consecutive spare bits, so as to determine whether to activate or deactivate the corresponding TCI.

Optionally, with the indication information carried in the MAC CE, dynamic activation or deactivation of the TCI for the target candidate cell in the MAC CE can be realized. Therefore, the additional requirements on UE performance and extra power consumption of the network device can be reduced.

In some embodiments, types of the TCI codepoint include an uplink TCI codepoint, a downlink TCI codepoint or a joint TCI codepoint. An occurrence sequence of the indication information in the N consecutive spare bits in the MAC CE is consistent with an occurrence sequence of a corresponding uplink TCI codepoint, downlink TCI codepoint or joint TCI codepoint.

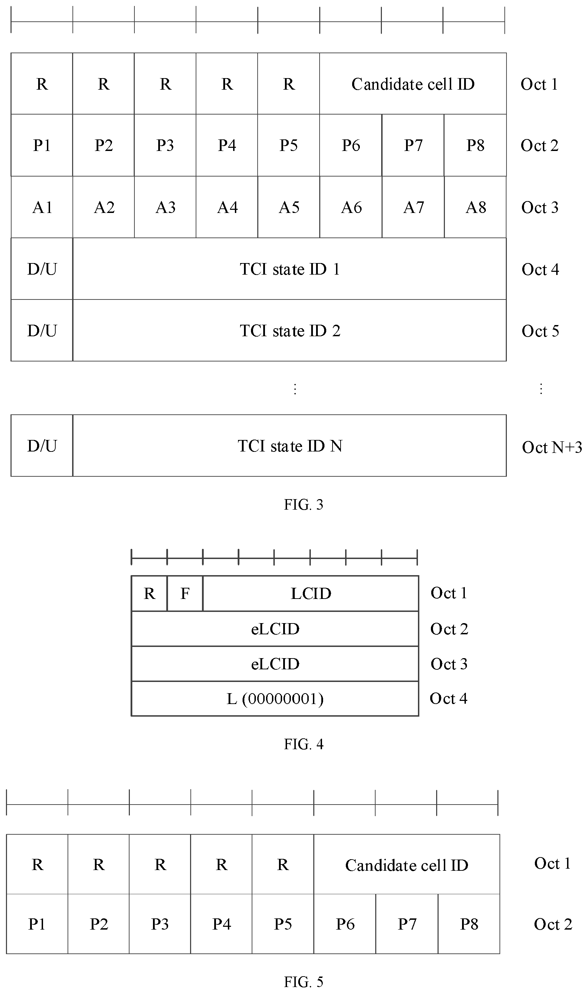

In this embodiment, if the indication information corresponds to the TCI codepoint, a new octet can be added in the MAC CE, and the indication information is carried by N consecutive spare bits in the newly added octet. At this time, to facilitate determining the mapping relationship between the indication information carried by each spare bit and each TCI codepoint, and thus accurately determining whether the state of the TCI codepoint corresponding to each indication information is the activated state or the deactivated state according to the indication information, the occurrence sequence of the indication information in the N consecutive spare bits may be kept consistent with the occurrence sequence of a corresponding uplink TCI codepoint, downlink TCI codepoint or joint TCI codepoint. The MAC CE may be as shown in FIG. 3.

FIG. 3 is a schematic diagram of another MAC CE provided by an embodiment of the present disclosure. In FIG. 3, the first octet in the MAC CE includes a field corresponding to a spare bit and a Candidate cell ID field. The second octet includes a Pi field (denoted as P1, P2, ..., P8 in FIG. 3) corresponding to the TCI codepoint. The third octet is a newly added octet, including Ai fields (denoted as A1, A2, ..., A8 in FIG. 3) corresponding to N consecutive spare bits (where N is 8 in FIG. 3), and the sequence of the Ai field is consistent with that of the Pi field (in FIG. 3, A1 corresponds to P1, A2 corresponds to P2, ..., A8 corresponds to P8). Each octet from the fourth octet to the last octet includes a D/U field and a TCI state ID field (denoted as TCI state ID 1, TCI state ID 2, ..., TCI state ID N in FIG. 3). After receiving the MAC CE, the terminal device determines whether the state of the TCI codepoint corresponding to each indication information is an activated state or a deactivated state according to the indication information carried by the spare bit corresponding to the Ai field, so as to determine whether to activate or deactivate the corresponding TCI.

Optionally, a value of the indication information for activation is different from a value of the indication information for deactivation. If the value of the indication information carried by the spare bit corresponding to the A1 field is 0, the terminal device considers the TCI codepoint corresponding to the P1 field to be in a deactivated state, and accordingly deactivates the TCI corresponding to the TCI codepoint. If the value of the indication information carried by the spare bit corresponding to the A2 field is 1, the terminal device considers the TCI codepoint corresponding to the P2 field to be in an activated state, and accordingly activates the TCI corresponding to the TCI codepoint.

Optionally, with the indication information carried in the MAC CE, dynamic activation or deactivation of the TCI for the target candidate cell in the MAC CE can be realized. Therefore, the additional requirements on UE performance and extra power consumption of the network device can be reduced.

In some embodiments, the predefined MAC CE includes: a subheader of the MAC CE indicating that a length of the MAC CE is a predefined length, and the length of the MAC CE correspondingly being the predefined length.

In this embodiment, a protocol may be established between the network device and the terminal device, where the predefined MAC CE serves as a basis for indicating deactivation of all TCIs for the target candidate cell that appear in that MAC CE. Therefore, after the network device sends the MAC CE to the terminal device, if the subheader of the MAC CE indicates that the length of the MAC CE is the predefined length and the length of the MAC CE matches the predefined length, the terminal device complies with the protocol stipulation to deactivate the TCI for the target candidate cell in the MAC CE. If the subheader of the MAC CE indicates that the length of the MAC CE is the predefined length while the length of the MAC CE is not the predefined length, deactivation of the TCI for the target candidate cell in the MAC CE is not performed. Therefore, dynamic activation or deactivation of the TCI for the target candidate cell in the MAC CE may also be implemented in an implicit manner, thereby further reducing additional requirements on UE performance and extra power consumption of the network device.

Optionally, the predefined MAC CE may be an MAC CE whose length is the predefined length, that is, the subheader of the MAC CE indicates that the length of the MAC CE is the predefined length, and the length of the MAC CE matches the predefined length. The subheader of the MAC CE may be as shown in FIG. 4.

FIG. 4 is a schematic diagram of a subheader of an MAC CE provided by an embodiment of the present disclosure. In FIG. 4, the first octet in the subheader of the MAC CE includes an LCID field corresponding to identification information of a logical channel, an R field corresponding to spare bits and an F field. The second octet and the third octet include an eLCID field corresponding to identification information of an enhanced logical channel. The fourth octet includes an L field, where the L field is used to indicate the length of the MAC CE, and the F field is used to indicate the size of the L field.

Optionally, the predefined length may be 2 octets, and an MAC CE of 2 octets may be as shown in FIG. 5.

FIG. 5 is a schematic diagram of an MAC CE of 2 octets provided by an embodiment of the present disclosure. In FIG. 5, the first octet of the MAC CE includes R fields corresponding to spare bits and a Candidate cell ID field. The second octet includes a Pi field corresponding to a TCI codepoint (denoted as P1, P2, ..., P8 in FIG. 5).

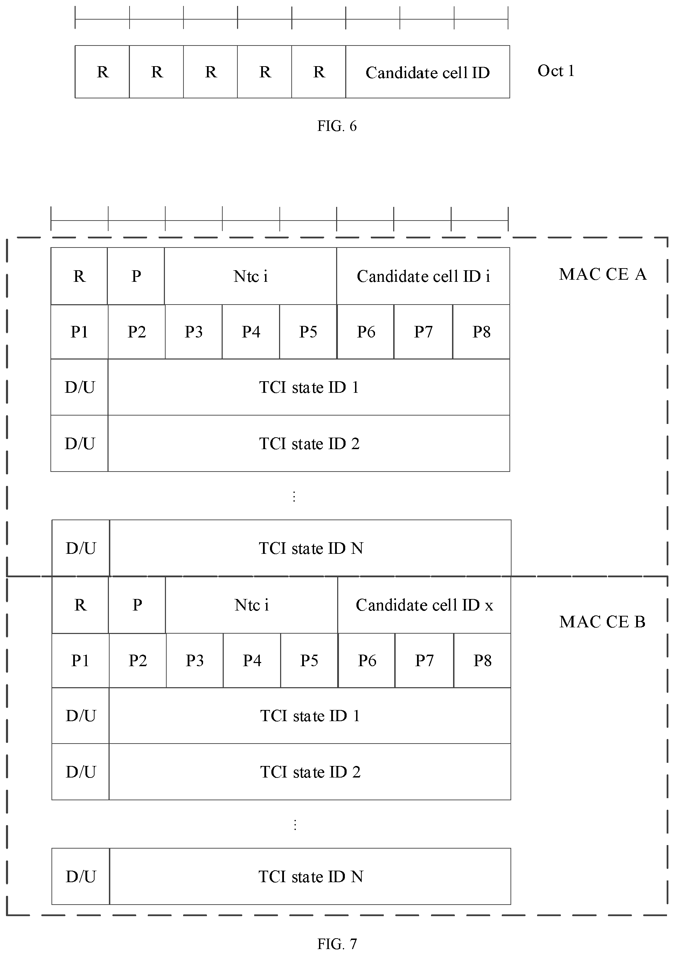

Optionally, the predefined length may be 1 octet, and an MAC CE of 1 octet may be as shown in FIG. 6.

FIG. 6 is a schematic diagram of an MAC CE of 1 octet provided by an embodiment of the present disclosure. In FIG. 6, the first octet of the MAC CE includes R fields corresponding to spare bits and a Candidate cell ID field.

In some embodiments, when the MAC CE does not include information of a TCI state identifier, the MAC CE is configured to deactivate all TCIs for the target candidate cell in the MAC CE.

In this embodiment, if the MAC CE does not include the information of a TCI state identifier (TCI state ID), but includes the cell identification information of the target candidate cell, activated TCI for the target candidate cell may be considered non-existent, so that all TCIs for the target candidate cell that appears in the MAC CE may be deactivated. Therefore, additional requirements on UE performance and extra power consumption of the network device can be reduced.

In some embodiments, when carrying the cell identification information of the at least one candidate cell, the MAC CE further includes at least one of the following: at least one TCI codepoint corresponding to cell identification information of each candidate cell, where one TCI codepoint corresponds to information of one uplink TCI state identifier, information of one downlink TCI state identifier, or information of one joint TCI state identifier; information of a TCI state identifier corresponding to a TCI codepoint carried in an independent control field, where the information of a state identifier indicates the number of TCIs corresponding to the TCI codepoint or a TCI mode corresponding to the TCI codepoint, and the TCI mode includes a joint uplink-downlink mode or a separate uplink-downlink mode; information of a TCI state identifier corresponding to a TCI codepoint carried in an independent indication field when a state of an uplink TCI and a state of a downlink TCI are separately indicated, where the information of a state identifier is information of an uplink TCI state identifier or information of a downlink TCI state identifier.

In this embodiment, the MAC CE sent by the network device may further carry the cell identification information of the at least one candidate cell, so as to implement activation or deactivation of a TCI of one candidate cell, or simultaneous activation or deactivation of TCIs of multiple candidate cells, thereby reducing additional requirements on UE performance and extra power consumption of the network device. In this case, the MAC CE may further carry at least one TCI codepoint corresponding to the cell identification information of each candidate cell, as well as information of a TCI state identifier which corresponds to the TCI codepoint and is carried in an independent control field. The information of a TCI state identifier may be used to indicate the number of TCIs corresponding to the TCI codepoint, or the information of a state identifier may be used to indicate the TCI mode corresponding to the TCI codepoint. The TCI mode includes the joint uplink-downlink mode or the separate uplink-downlink mode. If the states of the uplink TCI and the downlink TCI are separately indicated in the separate (separate) mode, the MAC CE may further include the information of a TCI state identifier which corresponds to the TCI codepoint and is carried in an independent indication field. The independent indication field may indicate whether the carried information of a TCI state identifier is information of an uplink TCI state identifier or information of a downlink TCI state identifier. The MAC CE may be as shown in FIG. 7.

FIG. 7 is a schematic diagram of another MAC CE provided by an embodiment of the present disclosure. In FIG. 7, two MAC CEs are included, namely MAC CE A and MAC CE B.

In the MAC CE A, the first octet includes an R field corresponding to spare bits, a P field, an Ntc i field, and a Candidate cell ID i field, where the P field is used to indicate whether there exists a next candidate cell and its corresponding TCI, and the Ntc i field is used to indicate the number of TCI codepoints corresponding to Candidate Cell ID i. The second octet includes a Pi field corresponding to the TCI codepoint (denoted as P1, P2, ..., P8 in FIG. 7). Each octet from the third octet to the last octet includes a D/U field and a TCI state ID field (denoted as TCI state ID 1, TCI state ID 2, ..., TCI state ID N in FIG. 7).

In the MAC CE B, the first octet includes an R field corresponding to spare bits, a P field, an Ntc i field, and a Candidate cell ID x field, where the P field is used to indicate whether there exists a next candidate cell and its corresponding TCI, and the Ntc i field is used to indicate the number of TCI codepoints corresponding to Candidate Cell ID i. The (N+4)-th octet includes a Pi field corresponding to the TCI codepoint (denoted as P1, P2, ..., P8 in FIG. 7). Each octet from the third octet to the last octet includes a D/U field and a TCI state ID field (denoted as TCI state ID 1, TCI state ID 2, ..., TCI state ID N in FIG. 7).

For example, taking the joint TCI as an illustration, each TCI codepoint corresponds to one TCI state ID. The MAC CE received by the terminal device carries Candidate cell ID 1, TCI state ID 1 and TCI state ID 2 corresponding to Candidate cell ID 1, and further carries Candidate cell ID 2 and TCI state ID 3 corresponding to Candidate cell ID 2. The terminal device considers TCI state ID 1 and TCI state ID 2 corresponding to Candidate cell ID 1 to be in an activated state, and activates the TCI corresponding to TCI state ID 1 and the TCI corresponding to TCI state ID 2.

Afterwards, due to factors such as occlusion and movement of the UE, the network device finds that all TCIs corresponding to Candidate cell ID 2 are inappropriate. In addition, apart from TCIs corresponding to TCI state ID 1 and TCI state ID 2 of Candidate cell ID 1, the signal quality of synchronization signal blocks (SS Block, abbreviated as SSB) of TCIs corresponding to TCI state ID 4, TCI state ID 5 and TCI state ID 6 corresponding to Candidate cell ID 3 is relatively high, which can serve as candidate target cells and beams for handover. Therefore, the network device sends a new MAC CE, where the new MAC CE carries Candidate cell ID 1, as well as TCI state ID 1 and TCI state ID 2 corresponding to Candidate cell ID 1, and further carries TCI state ID 4, TCI state ID 5 and TCI state ID 6 corresponding to Candidate cell ID 3.

After receiving the new MAC CE, the terminal device takes the most recently received MAC CE as the basis, and considers TCI state ID 1 and TCI state ID 2 corresponding to Candidate cell ID 1 to be in an activated state, considers TCI state ID 4, TCI state ID 5 and TCI state ID 6 corresponding to Candidate cell ID 3 to be in an activated state, while considering TCI state ID 3 corresponding to Candidate cell ID 2 to be in a deactivated state. Therefore, the terminal device activates the TCIs corresponding to TCI state ID 1 and TCI state ID 2 for Candidate cell ID 1, and activates the TCIs corresponding to TCI state ID 4, TCI state ID 5 and TCI state ID 6 for Candidate cell ID 3, and deactivates the TCI corresponding to TCI state ID 3 for Candidate cell ID 2.

Optionally, if the value of the Ntc i field in the MAC CE is 0, all TCIs corresponding to the Candidate cell ID i are deactivated, so the octet where the Pi field is located may also be omitted from the MAC CE.

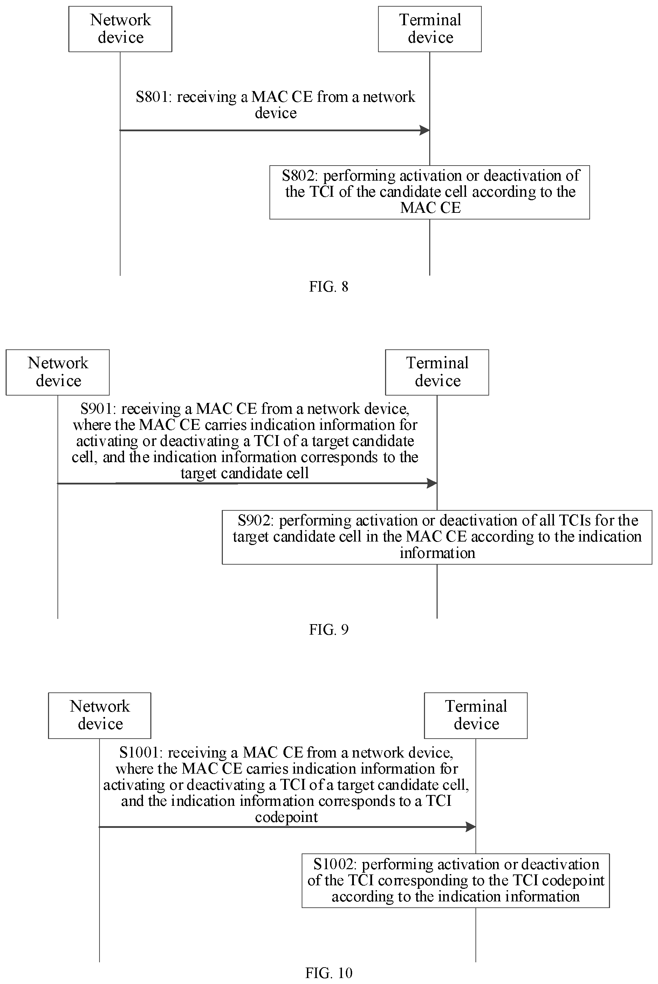

In some embodiments, a TCI processing method is provided, which is applied to a terminal device. FIG. 8 is a schematic flowchart of another TCI processing method provided by an embodiment of the present disclosure. As shown in FIG. 8, the method mainly includes the following steps.

S801: receiving an MAC CE from a network device, where the MAC CE is configured to explicitly or implicitly activate or deactivate a TCI of a candidate cell.

In this step, an explicit manner adopted includes: the MAC CE carrying indication information for activating or deactivating a TCI of a target candidate cell.

An implicit manner adopted includes: activation or deactivation of a TCI of a target candidate cell according to a predefined MAC CE; or, the MAC CE carrying cell identification information of at least one candidate cell to activate a TCI of the at least one candidate cell.

S802: performing activation or deactivation of the TCI of the candidate cell according to the MAC CE.

In the TCI processing method provided by the embodiments of the present disclosure, the MAC CE is configured to explicitly or implicitly activate or deactivate the TCI of the candidate cell. After the network device sends the MAC CE to the terminal device, the terminal device may dynamically activate or deactivate the TCI that appears in the MAC CE according to the MAC CE, thereby reducing additional requirements on UE performance and extra power consumption of the network device.

In some embodiments, a TCI processing method is provided, which is applied to a terminal device. FIG. 9 is a schematic flowchart of another TCI processing method provided by an embodiment of the present disclosure. As shown in FIG. 9, the method mainly includes the following steps.

S901: receiving an MAC CE from a network device, where the MAC CE carries indication information for activating or deactivating a TCI of a target candidate cell, and the indication information corresponds to the target candidate cell.

S902: performing activation or deactivation of all TCIs for the target candidate cell in the MAC CE according to the indication information.

In the TCI processing method provided by the embodiments of the present disclosure, the MAC CE is configured to explicitly activate or deactivate the TCI of the candidate cell. After the network device sends the MAC CE to the terminal device, the terminal device may dynamically activate or deactivate the TCI that appears in the MAC CE according to the MAC CE, thereby reducing additional requirements on UE performance and extra power consumption of the network device.

In some embodiments, the indication information corresponds to the target candidate cell, and the indication information is carried in a spare bit of the MAC CE.

In this embodiment, if the indication information corresponds to the target candidate cell, a certain spare bit in the MAC CE may be adopted to carry the indication information. After receiving the MAC CE, the terminal device determines to activate or deactivate all TCIs for the target candidate cell that appear in the MAC CE according to the indication information carried by the spare bit. The MAC CE may be as shown in FIG. 2.

Optionally, the indication information may be indicated on a per candidate cell (per candidate cell) basis. One MAC CE carries only cell identification information of one candidate cell. Therefore, the indication information carried in the MAC CE sent by the network device may correspond to the candidate cell corresponding to the MAC CE, i.e., the target candidate cell, and all TCIs that appear in the MAC CE are TCIs of the target candidate cell.

Optionally, if the indication information is used to indicate activation of all TCIs for the target candidate cell in the MAC CE, the terminal device activates all TCIs for the target candidate cell in the MAC CE. If the indication information is used to indicate deactivation of all TCIs for the target candidate cell in the MAC CE, the terminal device deactivates all TCIs for the target candidate cell in the MAC CE.

For example, if the indication information corresponds to the target candidate cell, when a value of the indication information is 0, the terminal device considers all TCIs for the target candidate cell that appear in the MAC CE to be in a deactivated state, and thus deactivates all TCIs that appear in the MAC CE. When the value of the indication information is 1, the terminal device considers all TCIs for the target candidate cell that appear in the MAC CE to be in an activated state, and thus activates all TCIs that appear in the MAC CE.

Optionally, with the indication information carried in the MAC CE, dynamic activation or deactivation of the TCI for the target candidate cell in the MAC CE can be realized. Therefore, the additional requirements on UE performance and extra power consumption of the network device can be reduced.

In some embodiments, the indication information corresponds to the target candidate cell, and the indication information is used to indicate activation or deactivation of the TCI corresponding to information of a TCI state identifier carried in the MAC CE of the target candidate cell.

In this embodiment, the indication information may be indicated on a per candidate cell (per candidate cell) basis. One MAC CE carries only cell identification information of one candidate cell. Therefore, the indication information carried in the MAC CE sent by the network device may correspond to the candidate cell corresponding to the MAC CE, i.e., the target candidate cell, and all TCIs that appear in the MAC CE are TCIs of the target candidate cell.

Optionally, when the indication information is used to indicate activation of the TCI corresponding to the TCI state ID carried in the MAC CE of the target candidate cell, the terminal device activates the TCI corresponding to the TCI state ID carried in the MAC CE of the target candidate cell. When the indication information is used to indicate deactivation of the TCI corresponding to the TCI state ID carried in the MAC CE of the target candidate cell, the terminal device deactivates the TCI corresponding to the TCI state ID carried in the MAC CE of the target candidate cell.

Optionally, with the indication information carried in the MAC CE, dynamic activation or deactivation of the TCI for the target candidate cell in the MAC CE can be realized. Therefore, the additional requirements on UE performance and extra power consumption of the network device can be reduced.

In some embodiments, a TCI processing method is provided, which is applied to a terminal device. FIG. 10 is a schematic flowchart of another TCI processing method provided by an embodiment of the present disclosure. As shown in FIG. 10, the method mainly includes the following steps.

S1001: receiving an MAC CE from a network device, where the MAC CE carries indication information for activating or deactivating a TCI of a target candidate cell, and the indication information corresponds to a TCI codepoint.

S1002: performing activation or deactivation of the TCI corresponding to the TCI codepoint according to the indication information.

In the TCI processing method provided by the embodiments of the present disclosure, the MAC CE is configured to explicitly activate or deactivate the TCI of the candidate cell. After the network device sends the MAC CE to the terminal device, the terminal device may dynamically activate or deactivate the TCI that appears in the MAC CE according to the MAC CE, thereby reducing additional requirements on UE performance and extra power consumption of the network device.

In some embodiments, the indication information may also be indicated on a per TCI codepoint (per TCI codepoint) basis. If the indication information corresponding to each TCI codepoint indicates that a state of the TCI codepoint is an activated state, so as to determine to activate or deactivate the corresponding TCI. If the indication information corresponding to each TCI codepoint indicates that the state of the TCI codepoint is a deactivated state, so as to determine to deactivate the corresponding TCI.

For example, if the indication information corresponds to a TCI codepoint, when a value of the indication information is 0, the terminal device considers a TCI corresponding to the TCI codepoint to be in a deactivated state, and thus deactivates the TCI corresponding to the TCI codepoint. When the value of the indication information is 1, the terminal device considers the TCI corresponding to the TCI codepoint to be in an activated state, and thus activates the TCI corresponding to the TCI codepoint.

Optionally, with the indication information carried in the MAC CE, dynamic activation or deactivation of the TCI for the target candidate cell in the MAC CE can be realized. Therefore, the additional requirements on UE performance and extra power consumption of the network device can be reduced.

In some embodiments, when the indication information corresponds to the TCI codepoint, the indication information is carried in N consecutive spare bits in the MAC CE; where a value of N depends on the number of TCI codepoints indicated in the MAC CE; or a maximum value of N is 8 or 16.

In this embodiment, if the indication information corresponds to the TCI codepoint, a new octet can be added in the MAC CE, and the indication information is carried by N consecutive spare bits in the newly added octet. A value of N depends on the number of TCI codepoints indicated in the MAC CE. For example, if the number of TCI codepoints indicated in the MAC CE is 8, then N is equal to 8. The value of N can also be set to a maximum of 8 or 16.

Optionally, after receiving the MAC CE, the terminal device determines whether the state of the TCI codepoint corresponding to each indication information is an activated state or a deactivated state according to the indication information carried by the N consecutive spare bits, so as to determine whether to activate or deactivate the corresponding TCI.

Optionally, with the indication information carried in the MAC CE, dynamic activation or deactivation of the TCI for the target candidate cell in the MAC CE can be realized. Therefore, the additional requirements on UE performance and extra power consumption of the network device can be reduced.

In some embodiments, types of the TCI codepoint include an uplink TCI codepoint, a downlink TCI codepoint or a joint TCI codepoint. An occurrence sequence of the indication information in the N consecutive spare bits in the MAC CE is consistent with an occurrence sequence of a corresponding uplink TCI codepoint, downlink TCI codepoint or joint TCI codepoint. The indication information is used to indicate that a state of the TCI codepoint corresponding to the indication information is an activated state or a deactivated state.

In this embodiment, if the indication information corresponds to the TCI codepoint, a new octet can be added in the MAC CE, and the indication information is carried by N consecutive spare bits in the newly added octet. At this time, to facilitate determining the mapping relationship between the indication information carried by each spare bit and each TCI codepoint, and thus accurately determining whether the state of the TCI codepoint corresponding to each indication information is the activated state or the deactivated state according to the indication information, the occurrence sequence of the indication information in the N consecutive spare bits may be kept consistent with the occurrence sequence of a corresponding uplink TCI codepoint, downlink TCI codepoint or joint TCI codepoint. The MAC CE may be as shown in FIG. 3.

Optionally, a value of the indication information for activation is different from a value of the indication information for deactivation. If the value of the indication information carried by the spare bit corresponding to the A1 field is 0, the terminal device considers the TCI codepoint corresponding to the P1 field to be in a deactivated state, and accordingly deactivates the TCI corresponding to the TCI codepoint. If the value of the indication information carried by the spare bit corresponding to the A2 field is 1, the terminal device considers the TCI codepoint corresponding to the P2 field to be in an activated state, and accordingly activates the TCI corresponding to the TCI codepoint.

Optionally, with the indication information carried in the MAC CE, dynamic activation or deactivation of the TCI for the target candidate cell in the MAC CE can be realized. Therefore, the additional requirements on UE performance and extra power consumption of the network device can be reduced.

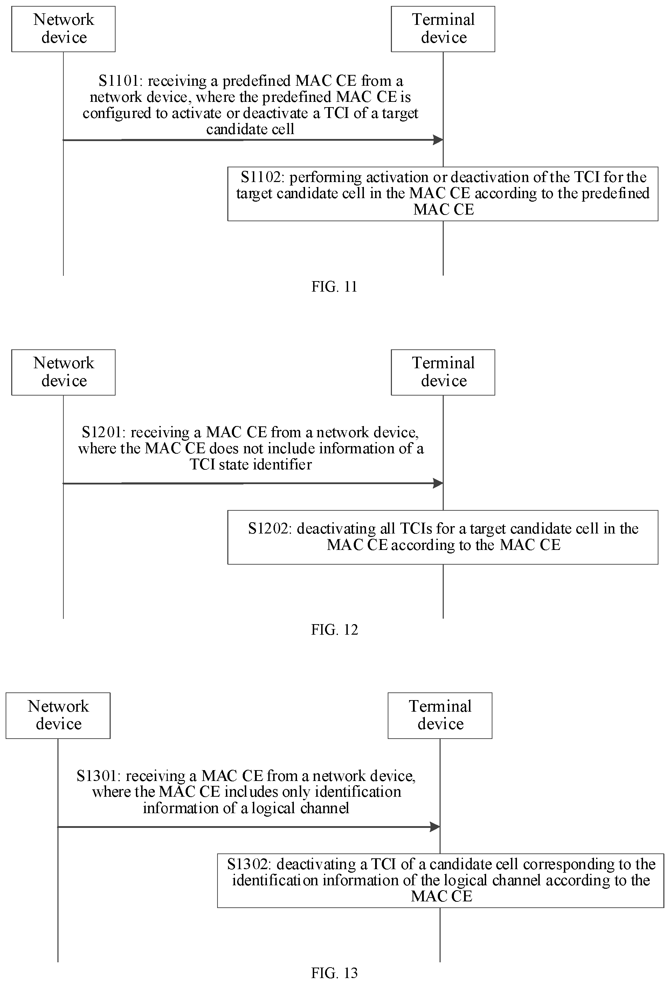

In some embodiments, a TCI processing method is provided, which is applied to a terminal device. FIG. 11 is a schematic flowchart of another TCI processing method provided by an embodiment of the present disclosure. As shown in FIG. 11, the method mainly includes the following steps.

S1101: receiving a predefined MAC CE from a network device, where the predefined MAC CE is configured to activate or deactivate a TCI of a target candidate cell.

S1102: performing activation or deactivation of the TCI for the target candidate cell in the MAC CE according to the predefined MAC CE.

In this step, a protocol between the network device and the terminal device may stipulate that the predefined MAC CE is configured to indicate deactivation of all TCIs for the target candidate cell that appear in the MAC CE. Therefore, after the network device sends the predefined MAC CE to the terminal device, the terminal device determines whether to deactivate all TCIs for the target candidate cell that appear in the MAC CE in accordance with the protocol stipulation based on the received MAC CE.

Optionally, a protocol between the network device and the terminal device may stipulate that the predefined MAC CE is configured to indicate activation of all TCIs for the target candidate cell that appear in the MAC CE. Therefore, after the network device sends the predefined MAC CE to the terminal device, the terminal device determines whether to activate all TCIs for the target candidate cell that appear in the MAC CE in accordance with the protocol stipulation based on the received MAC CE.

Therefore, dynamic activation or deactivation of the TCI for the target candidate cell in the MAC CE may also be implemented in an implicit manner, thereby reducing the additional requirements on UE performance and extra power consumption of the network device.

In the TCI processing method provided by the embodiments of the present disclosure, the MAC CE is configured to implicitly activate or deactivate the TCI of the candidate cell. After the network device sends the MAC CE to the terminal device, the terminal device may dynamically activate or deactivate the TCI that appears in the MAC CE according to the MAC CE, thereby reducing additional requirements on UE performance and extra power consumption of the network device.

In some embodiments, the predefined MAC CE includes: a subheader of the MAC CE indicating that a length of the MAC CE is a predefined length, and the length of the MAC CE correspondingly being the predefined length.

In this embodiment, a protocol between the network device and the terminal device may stipulate that an MAC CE of a predefined length is configured to indicate the deactivation of the TCI for the target candidate cell in this MAC CE. After receiving the MAC CE, the terminal device deactivates the TCI for the target candidate cell in the MAC CE when a subheader of the MAC CE indicates that a length of the MAC CE is a predefined length and the length of the MAC CE matches the predefined length. If the subheader of the MAC CE indicates that the length of the MAC CE is the predefined length, but the length of the MAC CE is not the predefined length, deactivation of the TCI for the target candidate cell in the MAC CE is not performed.

Optionally, a protocol between the network device and the terminal device may stipulate that an MAC CE of a predefined length is configured to indicate the activation of the TCI for the target candidate cell in this MAC CE. After receiving the MAC CE, the terminal device activates the TCI for the target candidate cell in the MAC CE when a subheader of the MAC CE indicates that a length of the MAC CE is a predefined length and the length of the MAC CE matches the predefined length. If the subheader of the MAC CE indicates that the length of the MAC CE is the predefined length, but the length of the MAC CE is not the predefined length, activation of the TCI for the target candidate cell in the MAC CE is not performed.

Optionally, the predefined MAC CE may be an MAC CE whose length is the predefined length, that is, the subheader of the MAC CE indicates that the length of the MAC CE is the predefined length, and the length of the MAC CE matches the predefined length. The subheader of the MAC CE may be as shown in FIG. 4.

Optionally, the predefined length may be 2 octets, and an MAC CE of 2 octets may be as shown in FIG. 5.

Optionally, the predefined length may be 1 octet, and an MAC CE of 1 octet may be as shown in FIG. 6.

In some embodiments, a TCI processing method is provided, which is applied to a terminal device. FIG. 12 is a schematic flowchart of another TCI processing method provided by an embodiment of the present disclosure. As shown in FIG. 12, the method mainly includes the following steps.

S1201: receiving an MAC CE from a network device, where the MAC CE does not include information of a TCI state identifier.

S1202: deactivating all TCIs for a target candidate cell in the MAC CE according to the MAC CE.

In this step, if the MAC CE does not include the information of a TCI state identifier (TCI state ID field), but includes the cell identification information of the target candidate cell, activated TCI for the target candidate cell may be considered non-existent, so that all TCIs for the target candidate cell that appears in the MAC CE may be deactivated, thereby reducing additional requirements on UE performance and extra power consumption of the network device.

In the TCI processing method provided by the embodiments of the present disclosure, the MAC CE is configured to implicitly activate or deactivate the TCI of the candidate cell. After the network device sends the MAC CE to the terminal device, the terminal device may dynamically activate or deactivate the TCI that appears in the MAC CE according to the MAC CE, thereby reducing additional requirements on UE performance and extra power consumption of the network device.

In some embodiments, a TCI processing method is provided, which is applied to a terminal device. FIG. 13 is a schematic flowchart of another TCI processing method provided by an embodiment of the present disclosure. As shown in FIG. 13, the method mainly includes the following steps.

S1301: receiving an MAC CE from a network device, where the MAC CE includes only identification information of a logical channel.

S1302: deactivating a TCI of a candidate cell corresponding to the identification information of the logical channel according to the MAC CE.

In this step, the MAC CE may not include cell identification information of a candidate cell, but only include the identification information of the logical channel. It may be considered that no candidate cell has an activated TCI. Therefore, deactivation of the TCI of the candidate cell corresponding to the identification information of the logical channel can be implemented by using this MAC CE, thereby reducing additional requirements on UE performance and extra power consumption of the network device.

In the TCI processing method provided by the embodiments of the present disclosure, the MAC CE is configured to implicitly activate or deactivate the TCI of the candidate cell. After the network device sends the MAC CE to the terminal device, the terminal device may dynamically activate or deactivate the TCI that appears in the MAC CE according to the MAC CE, thereby reducing additional requirements on UE performance and extra power consumption of the network device.

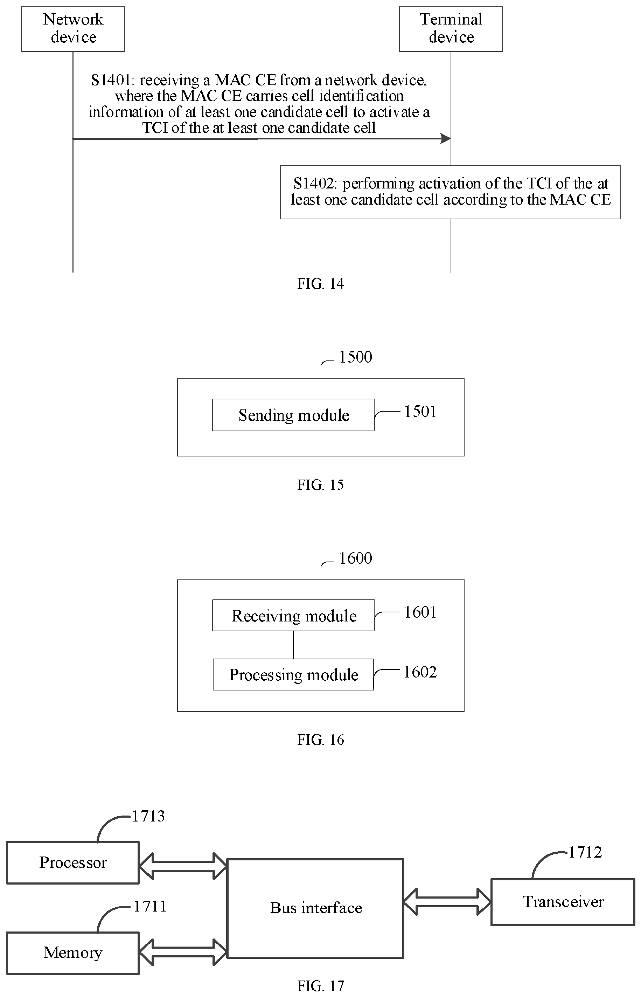

In some embodiments, a TCI processing method is provided, which is applied to a terminal device. FIG. 14 is a schematic flowchart of another TCI processing method provided by an embodiment of the present disclosure. As shown in FIG. 14, the method mainly includes the following steps.

S1401: receiving an MAC CE from a network device, where the MAC CE carries cell identification information of at least one candidate cell to activate a TCI of the at least one candidate cell.

S1402: performing activation of the TCI of the at least one candidate cell according to the MAC CE.

In the TCI processing method provided by the embodiments of the present disclosure, the MAC CE is configured to implicitly activate or deactivate the TCI of the candidate cell. After the network device sends the MAC CE to the terminal device, the terminal device may dynamically activate or deactivate the TCI that appears in the MAC CE according to the MAC CE, thereby reducing additional requirements on UE performance and extra power consumption of the network device.

In some embodiments, when carrying the cell identification information of the at least one candidate cell, the MAC CE further includes at least one of the following: at least one TCI codepoint corresponding to cell identification information of each candidate cell, where one TCI codepoint corresponds to information of one uplink TCI state identifier, information of one downlink TCI state identifier, or information of one joint TCI state identifier; information of a TCI state identifier corresponding to a TCI codepoint carried in an independent control field, where the information of a state identifier indicates the number of TCIs corresponding to the TCI codepoint or a TCI mode corresponding to the TCI codepoint, and the TCI mode includes a joint uplink-downlink mode or a separate uplink-downlink mode; information of a TCI state identifier corresponding to a TCI codepoint carried in an independent indication field when a state of an uplink TCI and a state of a downlink TCI are separately indicated, where the information of a state identifier is information of an uplink TCI state identifier or information of a downlink TCI state identifier.

In this embodiment, the MAC CE sent by the network device may further carry the cell identification information of the at least one candidate cell, so as to implement activation or deactivation of a TCI of one candidate cell, or simultaneous activation or deactivation of TCIs of multiple candidate cells, thereby reducing additional requirements on UE performance and extra power consumption of the network device. In this case, the MAC CE may further carry at least one TCI codepoint corresponding to the cell identification information of each candidate cell, as well as information of a TCI state identifier which corresponds to the TCI codepoint and is carried in an independent control field. The information of a state identifier may be used to indicate the number of TCIs corresponding to the TCI codepoint, or the information of a state identifier may be used to indicate the TCI mode corresponding to the TCI codepoint. The TCI mode includes the joint uplink-downlink mode or the separate uplink-downlink mode. If the states of the uplink TCI and the downlink TCI are separately indicated in the separate mode, the MAC CE may further include the information of the TCI state identifier which corresponds to the TCI codepoint and is carried in an independent indication field. The independent indication field may indicate whether the carried information of the TCI state identifier is the information of the uplink TCI state identifier or information of the downlink TCI state identifier. The MAC CE may be as shown in FIG. 7.

In some embodiments, a state of a TCI corresponding to cell identification information carried in an MAC CE received at a first time is an activated state, and the first time is the latest time at which the MAC CE is received.

In this embodiment, due to factors such as occlusion and movement of the terminal device, it is necessary to switch the target cell and beam to ensure good signal quality of an SSB corresponding to the TCI. Therefore, the network device monitors in real-time whether the TCI(s) corresponding to one or more candidate cells in the MAC CE sent to the terminal device is appropriate. If inappropriate, the network device needs to send a new MAC CE to the terminal device. Accordingly, the terminal device may take the most recently received MAC CE as the basis, and activate a TCI corresponding to cell identification information carried in the most recently received MAC CE.

In some embodiments, if an MAC CE is received at a second time, and cell identification information carried in the MAC CE is not included in the cell identification information carried in the MAC CE received at the first time, then a state of a TCI corresponding to the cell identification information carried in the MAC CE received at the second time is a deactivated state, where the second time is earlier than the first time.

In this embodiment, the network device may send the MAC CE to the terminal device multiple times. After sending the MAC CE to the terminal device at the second time, when detecting that the TCI(s) corresponding to one or more candidate cells in the MAC CE sent at the second time is inappropriate, the network device may send a new MAC CE (i.e., the MAC CE sent at the first time) to the terminal device. The terminal device takes the cell identification information carried in the most recently received MAC CE and the corresponding TCI as the basis, and activates the TCI corresponding to the cell identification information carried in the most recently received MAC CE. Therefore, while realizing dynamic activation or deactivation of the TCI for the target candidate cell in the MAC CE and reducing additional requirements on UE performance and extra power consumption of the network device, it can also ensure the stronger SSB signal quality of a TCI of the to-be-handover target cell.

Optionally, if the terminal device receives the MAC CE at the second time, and the cell identification information carried in the MAC CE received at the second time is not included in the cell identification information carried in the MAC CE received at the first time, it is determined that the TCI(s) corresponding to one or more candidate cells in the MAC CE received at the second time is all inappropriate. Therefore, with the most recently received MAC CE as the basis, the TCI corresponding to the cell identification information carried in the most recently received MAC CE is activated, and the TCI corresponding to the cell identification information carried in the MAC CE received at the second time is deactivated.

In some embodiments, if the cell identification information carried in the MAC CE received at the second time is identical to the cell identification information carried in the MAC CE received at the first time, and TCIs corresponding to the same cell identification information are identical, then a state of the same TCIs corresponding to the same cell identification information is an activated state.

In this embodiment, the network device may send the MAC CE to the terminal device multiple times. After sending the MAC CE to the terminal device at the second time, when detecting that the TCI(s) corresponding to one or more candidate cells in the MAC CE sent at the second time is inappropriate, the network device may send a new MAC CE (i.e., the MAC CE sent at the first time) to the terminal device. The terminal device takes the cell identification information carried in the most recently received MAC CE and the corresponding TCI as the basis, and activates the TCI corresponding to the cell identification information carried in the most recently received MAC CE. Therefore, while realizing dynamic activation or deactivation of the TCI for the target candidate cell in the MAC CE and reducing additional requirements on UE performance and extra power consumption of the network device, it can also ensure the stronger SSB signal quality of a TCI of the to-be-handover target cell.

Optionally, if the cell identification information carried in the MAC CE received at the second time is identical to the cell identification information carried in the MAC CE received at the first time, and TCIs corresponding to the same cell identification information are identical, it is considered that only the TCIs corresponding to part of the candidate cells in the MAC CE received at the second time are appropriate. Therefore, with the most recently received MAC CE as the basis, the TCI corresponding to the cell identification information carried in the most recently received MAC CE is activated, the state of the same TCI corresponding to the same cell identification information in the MAC CE received at the second time is ensured to be the activated state, and the TCI corresponding to different cell identification information carried in the MAC CE received at the second time is accordingly deactivated.

For example, taking the joint TCI as an illustration, each TCI codepoint corresponds to one TCI state ID. The MAC CE received by the terminal device carries Candidate cell ID 1, TCI state ID 1 and TCI state ID 2 corresponding to Candidate cell ID 1, and further carries Candidate cell ID 2 and TCI state ID 3 corresponding to Candidate cell ID 2. The terminal device considers TCI state ID 1 and TCI state ID 2 corresponding to Candidate cell ID 1 to be in an activated state, and activates the TCI corresponding to TCI state ID 1 and the TCI corresponding to TCI state ID 2.

Afterwards, due to factors such as occlusion and movement of the UE, the network device finds that all TCIs corresponding to Candidate cell ID 2 are inappropriate. In addition, apart from TCIs corresponding to TCI state ID 1 and TCI state ID 2 of Candidate cell ID 1, the signal quality of SSBs of TCIs corresponding to TCI state ID 4, TCI state ID 5 and TCI state ID 6 corresponding to Candidate cell ID 3 is relatively high, which can serve as candidate target cells and beams for handover. Therefore, the network device sends a new MAC CE, where the new MAC CE carries Candidate cell ID 1, as well as TCI state ID 1 and TCI state ID 2 corresponding to Candidate cell ID 1, and further carries TCI state ID 4, TCI state ID 5 and TCI state ID 6 corresponding to Candidate cell ID 3.

After receiving the new MAC CE, the terminal device takes the most recently received MAC CE as the basis, and considers TCI state ID 1 and TCI state ID 2 corresponding to Candidate cell ID 1 to be in an activated state, considers TCI state ID 4, TCI state ID 5 and TCI state ID 6 corresponding to Candidate cell ID 3 to be in an activated state, while considering TCI state ID 3 corresponding to Candidate cell ID 2 to be in a deactivated state. Therefore, the terminal device activates the TCIs corresponding to TCI state ID 1 and TCI state ID 2 for Candidate cell ID 1, and activates the TCIs corresponding to TCI state ID 4, TCI state ID 5 and TCI state ID 6 for Candidate cell ID 3, and deactivates the TCI corresponding to TCI state ID 3 for Candidate cell ID 2.

Optionally, the MAC CE may be as shown in FIG. 7, if the value of the Ntc i field in the MAC CE is 0, all TCIs corresponding to the Candidate cell ID i are deactivated, so the octet where the Pi field is located may also be omitted from the MAC CE.

In some embodiments, when the MAC CE carries the indication information for activating or deactivating the TCI of the target candidate cell, or when the MAC CE is the predefined MAC CE, the MAC CE is an LTM early TCI activation/deactivation MAC CE, and the LTM early TCI activation/deactivation MAC CE refers to a current per candidate activation MAC CE.

In an optional implementation, the current per candidate activation MAC CE may carry a Candidate Cell ID field corresponding to cell identification information of at most one candidate cell, a Pi field corresponding to a codepoint (codepoint), a D/U field, a TCI state ID field corresponding to information of a TCI state identifier, and an R field corresponding to a spare bit.

The Candidate cell ID field: used to indicate the cell identification information of the candidate cell in the MAC CE, and a field length of the Candidate cell ID field is 3 bits.

The Pi field: used to indicate whether each TCI codepoint has multiple TCI states or a single TCI state. If the Pi field is set to 1, the i-th TCI codepoint has an uplink TCI state and a downlink TCI state. If the Pi field is set to 0, the i-th TCI codepoint only includes a downlink/joint TCI state or an uplink TCI state. The codepoint corresponding to the TCI state is determined by its order in all TCI state ID fields.

The D/U field: used to indicate whether the TCI state ID field in the same octet is applicable to the downlink/joint TCI state, or to the uplink TCI state. If the D/U field is set to 1, the TCI state ID field in the same octet is applicable to downlink/joint TCI state. If the D/U field is set to 0, the TCI state ID field in the same octet is applicable to the uplink TCI state.

The TCI state ID field: if the D/U field is set to 1, a 7-bit-length TCI state ID is adopted; if the D/U field is set to 0, the most significant bit of the TCI state ID is regarded as a spare bit. The maximum number of activated TCI states is 16.

The R field is set to: 0.

In some embodiments, a TCI processing apparatus is provided and applied to a network device.

FIG. 15 shows a schematic diagram of a structure of a TCI processing apparatus provided by an embodiment of the present disclosure. As shown in FIG. 15, a TCI processing apparatus 1500 includes:
a sending module 1501, configured to send an MAC CE to a terminal device, where the MAC CE is configured to explicitly or implicitly activate or deactivate a TCI of a candidate cell;
where an explicit manner adopted includes:
   the MAC CE carrying indication information for activating or deactivating a TCI of a target candidate cell;
   an implicit manner adopted includes:
      activation or deactivation of a TCI of a target candidate cell according to a predefined MAC CE; or,
      the MAC CE carrying cell identification information of at least one candidate cell to activate a TCI of the at least one candidate cell.

In some embodiments, the indication information corresponds to the target candidate cell, and the indication information is used to indicate activation or deactivation of all TCIs for the target candidate cell in the MAC CE; or, the indication information corresponds to a TCI codepoint, and the indication information is used to indicate that a state of the TCI codepoint corresponding to the indication information is an activated state or a deactivated state.

In some embodiments, when the indication information corresponds to the target candidate cell, the indication information is carried in a spare bit of the MAC CE; when the indication information corresponds to the TCI codepoint, the indication information is carried in N consecutive spare bits in the MAC CE, and a value of N depends on the number of TCI codepoints indicated in the MAC CE.

In some embodiments, types of the TCI codepoint include an uplink TCI codepoint, a downlink TCI codepoint or a joint TCI codepoint.

In some embodiments, an occurrence sequence of the indication information in the N consecutive spare bits in the MAC CE is consistent with an occurrence sequence of a corresponding uplink TCI codepoint, downlink TCI codepoint or joint TCI codepoint.

In some embodiments, a value of the indication information for activation is different from a value of the indication information for deactivation.

In some embodiments, the predefined MAC CE includes: a subheader of the MAC CE indicating that a length of the MAC CE is a predefined length, and the length of the MAC CE correspondingly being the predefined length.

In some embodiments, the predefined length is 2 octets or 1 octet.

In some embodiments, when the MAC CE does not include information of a TCI state identifier, the MAC CE is configured to deactivate all TCIs for the target candidate cell in the MAC CE.

In some embodiments, when carrying the cell identification information of the at least one candidate cell, the MAC CE further includes at least one of the following: at least one TCI codepoint corresponding to cell identification information of each candidate cell, where one TCI codepoint corresponds to information of one uplink TCI state identifier, information of one downlink TCI state identifier, or information of one joint TCI state identifier; information of a TCI state identifier corresponding to a TCI codepoint carried in an independent control field, where the information of a state identifier indicates the number of TCIs corresponding to the TCI codepoint or a TCI mode corresponding to the TCI codepoint, and the TCI mode includes a joint uplink-downlink mode or a separate uplink-downlink mode; information of a TCI state identifier corresponding to a TCI codepoint carried in an independent indication field when a state of an uplink TCI and a state of a downlink TCI are separately indicated, where the information of a state identifier is information of an uplink TCI state identifier or information of a downlink TCI state identifier.

In some embodiments, a TCI processing apparatus is provided, which is applied to a terminal device.

FIG. 16 is a structural schematic diagram of a TCI processing apparatus provided by an embodiment of the present disclosure. As shown in FIG. 16, a TCI processing apparatus 1600 includes:
a receiving module 1601, configured to receive an MAC CE from a network device, where the MAC CE is configured to explicitly or implicitly activate or deactivate a TCI of a candidate cell;
a processing module 1602, configured to perform activation or deactivation of the TCI of the candidate cell according to the MAC CE;
where an explicit manner adopted includes:
   the MAC CE carrying indication information for activating or deactivating a TCI of a target candidate cell;
   an implicit manner adopted includes:
      activation or deactivation of a TCI of a target candidate cell according to a predefined MAC CE; or,
      the MAC CE carrying cell identification information of at least one candidate cell to activate a TCI of the at least one candidate cell.

In some embodiments, the indication information corresponds to the target candidate cell, the indication information corresponds to the target candidate cell, and the indication information is used to indicate activation or deactivation of all TCIs for the target candidate cell in the MAC CE, or the indication information is used to indicate activation or deactivation of a TCI corresponding to TCI identification information carried in the MAC CE for the target candidate cell.

In some embodiments, the indication information corresponds to a TCI codepoint, and the indication information is used to indicate activation or deactivation of a TCI corresponding to the TCI codepoint.

In some embodiments, types of the TCI codepoint include an uplink TCI codepoint, a downlink TCI codepoint or a joint TCI codepoint.

In some embodiments, when the indication information corresponds to the TCI codepoint, the indication information is carried in N consecutive spare bits in the MAC CE; where a value of N depends on the number of TCI codepoints indicated in the MAC CE; or a maximum value of N is 8 or 16.

In some embodiments, an occurrence sequence of the indication information in the N consecutive spare bits in the MAC CE is consistent with an occurrence sequence of a corresponding uplink TCI codepoint, downlink TCI codepoint or joint TCI codepoint, and the indication information is used to indicate that a state of the TCI codepoint corresponding to the indication information is an activated state or a deactivated state.

In some embodiments, a value of the indication information for activation is different from a value of the indication information for deactivation.

In some embodiments, the predefined MAC CE includes: a subheader of the MAC CE indicating that a length of the MAC CE is a predefined length, and the length of the MAC CE correspondingly being the predefined length.

In some embodiments, the predefined length is 2 octets or 1 octet.

In some embodiments, when the MAC CE does not include information of a TCI state identifier, the MAC CE is configured to deactivate all TCIs for the target candidate cell in the MAC CE.

In some embodiments, when the MAC CE only includes identification information of a logical channel, the MAC CE is configured to deactivate a TCI of the candidate cell corresponding to the identification information of the logical channel.

In some embodiments, when carrying the cell identification information of the at least one candidate cell, the MAC CE further includes at least one of the following: at least one TCI codepoint corresponding to cell identification information of each candidate cell, where one TCI codepoint corresponds to information of one uplink TCI state identifier, information of one downlink TCI state identifier, or information of one joint TCI state identifier; information of a TCI state identifier corresponding to a TCI codepoint carried in an independent control field, where the information of a state identifier indicates the number of TCIs corresponding to the TCI codepoint or a TCI mode corresponding to the TCI codepoint, and the TCI mode includes a joint uplink-downlink mode or a separate uplink-downlink mode; information of a TCI state identifier corresponding to a TCI codepoint carried in an independent indication field when a state of an uplink TCI and a state of a downlink TCI are separately indicated, where the information of a state identifier is information of an uplink TCI state identifier or information of a downlink TCI state identifier.

In some embodiments, a state of a TCI corresponding to cell identification information carried in an MAC CE received at a first time is an activated state, and the first time is the latest time at which the MAC CE is received.

In some embodiments, if an MAC CE is received at a second time, and cell identification information carried in the MAC CE is not included in the cell identification information carried in the MAC CE received at the first time, then a state of a TCI corresponding to the cell identification information carried in the MAC CE received at the second time is a deactivated state, where the second time is earlier than the first time; and/or, if cell identification information carried in an MAC CE received at a second time is identical to the cell identification information carried in the MAC CE received at the first time, and TCIs corresponding to the same cell identification information are identical, then a state of the same TCIs corresponding to the same cell identification information is an activated state.

It should be noted that the division of units in the embodiments of the present disclosure is illustrative and merely a logical functional division, and alternative division manners may be adopted in actual implementation. In addition, each functional unit in each embodiment of the present disclosure may be integrated into one processing unit, each unit may exist physically independently, or two or more units may be integrated into one unit. The integrated unit described above may be implemented in the form of hardware or in the form of a software functional unit.

If the integrated unit is implemented in the form of a software functional unit and sold or used as an independent product, it may be stored in a processor-readable storage medium. Based on such understanding, the technical solution of the present disclosure, essentially or the part that contributes to the related art, or all or part of the technical solution, may be embodied in the form of a computer software product. The computer software product is stored in a storage medium and includes several instructions for causing a computer device (which may be a personal computer, a server, a network device, or the like) or a processor (processor) to execute all or part of the steps of the methods of the respective embodiments of the present disclosure.

It should be noted that the apparatus provided by the embodiments of the present disclosure can implement all method steps achieved by the method embodiments and achieve the same technical effects. Repeated descriptions of the same parts and beneficial effects as those in the method embodiments are omitted herein.

In some embodiments, a TCI processing device is further provided.

FIG. 17 is a structural schematic diagram of a TCI processing device provided by an embodiment of the present disclosure. As shown in FIG.17, the TCI processing device includes: a memory 1711, a transceiver 1712, a processor 1713.

The memory 1711 is configured to store a computer program.

The transceiver 1712 is configured to transceive data under the control of the processor 1713.

In FIG. 17, a bus architecture may include any number of interconnected buses and bridges. Specifically, one or more processors denoted by the processor 1713 are coupled to various circuits of the memory denoted by the memory 1711. The bus architecture may also couple various other circuits such as a peripheral device, a voltage regulator and a power management circuit, all of which are well known in the art and thus will not be further described herein. A bus interface provides an interface. The transceiver 1712 may be a plurality of elements, including a transmitter and a receiver, and provides units for communicating with various other apparatuses over transmission media, where the transmission media include a wireless channel, a wired channel, an optical cable, and the like. The processor 1713 is responsible for managing the bus architecture and performing conventional processing, and the memory 1711 may store data used by the processor 1713 during operation execution.

The processor 1713 may be a central processing unit (Central Processing Unit, abbreviated as CPU), an application specific integrated circuit (Application Specific Integrated Circuit, abbreviated as ASIC), a field-programmable gate array (Field-Programmable Gate Array, abbreviated as FPGA), or a complex programmable logic device (Complex Programmable Logic Device, abbreviated as CPLD). The processor may also adopt a multi-core architecture.

The processor 1713 reads the computer program in the memory 1711 and performs the following operations:
send an MAC CE to a terminal device, where the MAC CE is configured to explicitly or implicitly activate or deactivate a TCI of a candidate cell;
where an explicit manner adopted includes:
   the MAC CE carrying indication information for activating or deactivating a TCI of a target candidate cell;
   an implicit manner adopted includes:
      activation or deactivation of a TCI of a target candidate cell according to a predefined MAC CE; or,
      the MAC CE carrying cell identification information of at least one candidate cell to activate a TCI of the at least one candidate cell.

In some embodiments, the indication information corresponds to the target candidate cell, and the indication information is used to indicate activation or deactivation of all TCIs for the target candidate cell in the MAC CE; or,
the indication information corresponds to a TCI codepoint, and the indication information is used to indicate that a state of the TCI codepoint corresponding to the indication information is an activated state or a deactivated state.

In some embodiments, when the indication information corresponds to the target candidate cell, the indication information is carried in a spare bit of the MAC CE;
when the indication information corresponds to the TCI codepoint, the indication information is carried in N consecutive spare bits in the MAC CE, and a value of N depends on the number of TCI codepoints indicated in the MAC CE.

In some embodiments, types of the TCI codepoint include an uplink TCI codepoint, a downlink TCI codepoint or a joint TCI codepoint.

In some embodiments, an occurrence sequence of the indication information in the N consecutive spare bits in the MAC CE is consistent with an occurrence sequence of a corresponding uplink TCI codepoint, downlink TCI codepoint or joint TCI codepoint.

In some embodiments, a value of the indication information for activation is different from a value of the indication information for deactivation.

In some embodiments, the predefined MAC CE includes:
a subheader of the MAC CE indicating that a length of the MAC CE is a predefined length, and the length of the MAC CE correspondingly being the predefined length.

In some embodiments, the predefined length is 2 octets or 1 octet.

In some embodiments, when the MAC CE does not include information of a TCI state identifier, the MAC CE is configured to deactivate all TCIs for the target candidate cell in the MAC CE.

In some embodiments, when carrying the cell identification information of the at least one candidate cell, the MAC CE further includes at least one of the following:
at least one TCI codepoint corresponding to cell identification information of each candidate cell, where one TCI codepoint corresponds to information of one uplink TCI state identifier, information of one downlink TCI state identifier, or information of one joint TCI state identifier;
information of a TCI state identifier corresponding to a TCI codepoint carried in an independent control field, where the information of a state identifier indicates the number of TCIs corresponding to the TCI codepoint or a TCI mode corresponding to the TCI codepoint, and the TCI mode includes a joint uplink-downlink mode or a separate uplink-downlink mode;
information of a TCI state identifier corresponding to a TCI codepoint carried in an independent indication field when a state of an uplink TCI and a state of a downlink TCI are separately indicated, where the information of a state identifier is information of an uplink TCI state identifier or information of a downlink TCI state identifier.

In some embodiments, a TCI processing device is further provided.

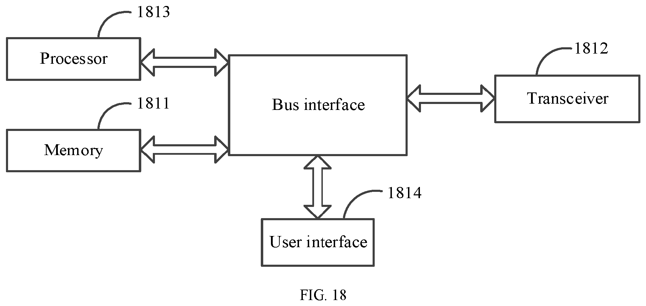

FIG. 18 is a structural schematic diagram of a TCI processing device provided by an embodiment of the present disclosure. As shown in FIG. 18, the TCI processing device includes: a memory 1811, a transceiver 1812, a processor 1813.

The memory 1811 is configured to store a computer program.

The transceiver 1812 is configured to transceive data under the control of the processor.

Here, in FIG. 18, a bus architecture may include any number of interconnected buses and bridges. Specifically, one or more processors denoted by the processor are coupled to various circuits of the memory denoted by the memory. The bus architecture may also couple various other circuits such as a peripheral device, a voltage regulator and a power management circuit, all of which are well known in the art and thus will not be further described herein. A bus interface provides an interface. The transceiver may be a plurality of elements, including a transmitter and a receiver, and provides units for communicating with various other apparatuses over transmission media, where the transmission media include, the transmission media include a wireless channel, a wired channel, an optical cable, and the like. For different user equipment, the user interface 1814 may also be an interface capable of connecting externally or internally to required devices. The connected devices include, but are not limited to, a keypad, a display, a loudspeaker, a microphone, a joystick, and the like.

The processor 1813 is responsible for managing the bus architecture and performing conventional processing, and the memory 1811 may store data used by the processor 1813 during operation execution.

Optionally, the processor can be a CPU, an ASIC, a FPGA, or a CPLD. The processor may also adopt a multi-core architecture. The processor and memory can also be physically disposed separately.

The processor 1813 reads the computer program in the memory 1811 and performs the following operations:
receive an MAC CE from a network device, where the MAC CE is configured to explicitly or implicitly activate or deactivate a TCI of a candidate cell;
perform activation or deactivation of the TCI of the candidate cell according to the MAC CE;
where an explicit manner adopted includes:
   the MAC CE carrying indication information for activating or deactivating a TCI of a target candidate cell;
   an implicit manner adopted includes:
      activation or deactivation of a TCI of a target candidate cell according to a predefined MAC CE; or,
      the MAC CE carrying cell identification information of at least one candidate cell to activate a TCI of the at least one candidate cell.

In some embodiments, the indication information corresponds to the target candidate cell, and the indication information is used to indicate activation or deactivation of all TCIs for the target candidate cell in the MAC CE, or the indication information is used to indicate activation or deactivation of a TCI corresponding to TCI identification information carried in the MAC CE for the target candidate cell.

In some embodiments, the indication information corresponds to a TCI codepoint, and the indication information is used to indicate activation or deactivation of a TCI corresponding to the TCI codepoint.

In some embodiments, types of the TCI codepoint include an uplink TCI codepoint, a downlink TCI codepoint or a joint TCI codepoint.

In some embodiments, when the indication information corresponds to the TCI codepoint, the indication information is carried in N consecutive spare bits in the MAC CE;
where a value of N depends on the number of TCI codepoints indicated in the MAC CE; or
a maximum value of N is 8 or 16.

In some embodiments, an occurrence sequence of the indication information in the N consecutive spare bits in the MAC CE is consistent with an occurrence sequence of a corresponding uplink TCI codepoint, downlink TCI codepoint or joint TCI codepoint, and the indication information is used to indicate that a state of the TCI codepoint corresponding to the indication information is an activated state or a deactivated state.

In some embodiments, a value of the indication information for activation is different from a value of the indication information for deactivation.

In some embodiments, the predefined MAC CE includes:
a subheader of the MAC CE indicating that a length of the MAC CE is a predefined length, and the length of the MAC CE correspondingly being the predefined length.

In some embodiments, the predefined length is 2 octets or 1 octet.

In some embodiments, when the MAC CE does not include information of a TCI state identifier, the MAC CE is configured to deactivate all TCIs for the target candidate cell in the MAC CE.

In some embodiments, when the MAC CE only includes identification information of a logical channel, the MAC CE is configured to deactivate a TCI of the candidate cell corresponding to the identification information of the logical channel.

In some embodiments, when carrying the cell identification information of the at least one candidate cell, the MAC CE further includes at least one of the following:
at least one TCI codepoint corresponding to cell identification information of each candidate cell, where one TCI codepoint corresponds to information of one uplink TCI state identifier, information of one downlink TCI state identifier, or information of one joint TCI state identifier;
information of a TCI state identifier corresponding to a TCI codepoint carried in an independent control field, where the information of a state identifier indicates the number of TCIs corresponding to the TCI codepoint or a TCI mode corresponding to the TCI codepoint, and the TCI mode includes a joint uplink-downlink mode or a separate uplink-downlink mode;
information of a TCI state identifier corresponding to a TCI codepoint carried in an independent indication field when a state of an uplink TCI and a state of a downlink TCI are separately indicated, where the information of a state identifier is information of an uplink TCI state identifier or information of a downlink TCI state identifier.

In some embodiments, a state of a TCI corresponding to cell identification information carried in an MAC CE received at a first time is an activated state, and the first time is the latest time at which the MAC CE is received.

In some embodiments, if an MAC CE is received at a second time, and cell identification information carried in the MAC CE is not included in the cell identification information carried in the MAC CE received at the first time, then a state of a TCI corresponding to the cell identification information carried in the MAC CE received at the second time is a deactivated state, where the second time is earlier than the first time;
and/or,
if cell identification information carried in an MAC CE received at a second time is identical to the cell identification information carried in the MAC CE received at the first time, and TCIs corresponding to the same cell identification information are identical, then a state of the same TCIs corresponding to the same cell identification information is an activated state.

It should be noted that the device provided by the embodiments of the present disclosure can implement all method steps achieved by the method embodiments and achieve the same technical effects. Repeated descriptions of the same parts and beneficial effects as those in the method embodiments are omitted herein.

In some embodiments, a non-transitory readable storage medium is also provided, which stores a computer program configured to enable a processor to perform the method of any one of the method embodiments.

The non-transitory readable storage medium may be any available medium or data storage device that the processor can access, including but not limited to a magnetic memory (such as a floppy disk, a hard disk, a magnetic tape, a magnetic disc (MO), etc.), an optical memory (such as a CD, a DVD, a BD, a HVD, etc.), and a semiconductor memory (such as a ROM, an EPROM, an EEPROM, a non-volatile memory (NAND FLASH), a solid-state drive (SSD)), etc.

In some embodiments, a computer program product is provided, including a computer program which is configured to enable a processor to perform the method in any one of the method embodiments.

It should be understood by those skilled in the art that the embodiments of the present disclosure may be provided as a method, a system, or a computer program product. Therefore, the present disclosure may take the form of a complete hardware embodiment, a complete software embodiment, or an embodiment combining software and hardware aspects. Furthermore, the present disclosure may take the form of a computer program product implemented on one or more computer-usable storage media (including but not limited to a disk storage and an optical storage, etc.) which include computer-usable program code.

The present disclosure is described with reference to a flowchart and/or a block diagram of the method, the device (system), and the computer program product in accordance with the embodiments of the present disclosure. It should be understood that each process and/or box in the flowchart and/or the block diagram, as well as the combination of the process and/or the box in the flowchart and/or the block diagram, can be implemented by computer-executable instructions. These computer-executable instructions may be provided to a processor of a general-purpose computer, a dedicated computer, an embedded processor, or other programmable data processing device to create a machine, such that the instructions executed by the processor of the computer or other programmable data processing device create means for performing the functions specified in one process or more processes of a flowchart, and/or one box or more boxes of a block diagram.

These processor-executable instructions may also be stored in a processor-readable memory that enables a computer or other programmable data processing device to operate in a specific manner, so that the instructions stored in that processor-readable memory produce an article of manufacture including instruction means for implementing the function specified in one process or more processes of a flowchart, and/or one box or more boxes of a block diagram.

Obviously, those skilled in the art can make various modifications and variations to the present disclosure without departing from its spirit and scope. Thus, if these modifications and variations of the present disclosure fall within the scope of the claims of the present disclosure and their equivalents, the present disclosure is intended to cover these modifications and variations.

## Claims

1. A transmission configuration indicator TCI processing method, applied to a network device, wherein the TCI processing method comprises:
sending a medium access control control element MAC CE to a terminal device, wherein the MAC CE is configured to explicitly or implicitly activate or deactivate a TCI of a candidate cell;
wherein an explicit manner adopted comprises:
the MAC CE carrying indication information for activating or deactivating a TCI of a target candidate cell;
an implicit manner adopted comprises:
activation or deactivation of a TCI of a target candidate cell according to a predefined MAC CE; or,
the MAC CE carrying cell identification information of at least one candidate cell to activate a TCI of the at least one candidate cell.

2. The TCI processing method according to claim 1, wherein when the MAC CE does not comprise information of a TCI state identifier, the MAC CE is configured to deactivate all TCIs for the target candidate cell in the MAC CE.

3. The TCI processing method according to claim 1, wherein the indication information corresponds to the target candidate cell, and the indication information is used to indicate activation or deactivation of all TCIs for the target candidate cell in the MAC CE; or,
the indication information corresponds to a TCI codepoint, and the indication information is used to indicate that a state of the TCI codepoint corresponding to the indication information is an activated state or a deactivated state.

4. The TCI processing method according to claim 3, wherein when the indication information corresponds to the target candidate cell, the indication information is carried in a spare bit of the MAC CE;
when the indication information corresponds to the TCI codepoint, the indication information is carried in N consecutive spare bits in the MAC CE, and a value of N depends on a number of TCI codepoints indicated in the MAC CE.

5. The TCI processing method according to claim 4, wherein types of the TCI codepoint comprise an uplink TCI codepoint, a downlink TCI codepoint or a joint TCI codepoint.

6. The TCI processing method according to claim 5, wherein an occurrence sequence of the indication information in the N consecutive spare bits in the MAC CE is consistent with an occurrence sequence of a corresponding uplink TCI codepoint, downlink TCI codepoint or joint TCI codepoint.

7. The TCI processing method according to any one of claims 1 to 6, wherein a value of the indication information for activation is different from a value of the indication information for deactivation.

8. The TCI processing method according to any one of claims 1 to 7, wherein the predefined MAC CE comprises:
a subheader of the MAC CE indicating that a length of the MAC CE is a predefined length, and the length of the MAC CE correspondingly being the predefined length.

9. The TCI processing method according to claim 8, wherein the predefined length is 2 octets or 1 octet.

10. The TCI processing method according to any one of claims 1 to 9, wherein when carrying the cell identification information of the at least one candidate cell, the MAC CE further comprises at least one of the following:
at least one TCI codepoint corresponding to cell identification information of each candidate cell, wherein one TCI codepoint corresponds to information of one uplink TCI state identifier, information of one downlink TCI state identifier, or information of one joint TCI state identifier;
information of a TCI state identifier corresponding to a TCI codepoint carried in an independent control field, wherein the information of a state identifier indicates a number of TCIs corresponding to the TCI codepoint or a TCI mode corresponding to the TCI codepoint, and the TCI mode comprises a joint uplink-downlink mode or a separate uplink-downlink mode;
information of a TCI state identifier corresponding to a TCI codepoint carried in an independent indication field when a state of an uplink TCI and a state of a downlink TCI are separately indicated, wherein the information of a state identifier is information of an uplink TCI state identifier or information of a downlink TCI state identifier.

11. A TCI processing method, applied to a terminal device, wherein the TCI processing method comprises:
receiving a MAC CE from a network device, wherein the MAC CE is configured to explicitly or implicitly activate or deactivate a TCI of a candidate cell;
performing activation or deactivation of the TCI of the candidate cell according to the MAC CE;
wherein an explicit manner adopted comprises:
the MAC CE carrying indication information for activating or deactivating a TCI of a target candidate cell;
an implicit manner adopted comprises:
activation or deactivation of a TCI of a target candidate cell according to a predefined MAC CE; or,
the MAC CE carrying cell identification information of at least one candidate cell to activate a TCI of the at least one candidate cell.

12. The TCI processing method according to claim 11, wherein when the MAC CE does not comprise information of a TCI state identifier, the MAC CE is configured to deactivate all TCIs for the target candidate cell in the MAC CE.

13. The TCI processing method according to claim 11, wherein the indication information corresponds to the target candidate cell, and the indication information is used to indicate activation or deactivation of all TCIs for the target candidate cell in the MAC CE, or the indication information is used to indicate activation or deactivation of a TCI corresponding to TCI identification information carried in the MAC CE for the target candidate cell.

14. The TCI processing method according to claim 11 or 13, wherein the indication information corresponds to a TCI codepoint, and the indication information is used to indicate activation or deactivation of a TCI corresponding to the TCI codepoint.

15. The TCI processing method according to claim 14, wherein types of the TCI codepoint comprise an uplink TCI codepoint, a downlink TCI codepoint or a joint TCI codepoint.

16. The TCI processing method according to claim 15, wherein when the indication information corresponds to the TCI codepoint, the indication information is carried in N consecutive spare bits in the MAC CE;
wherein a value of N depends on a number of TCI codepoints indicated in the MAC CE; or
a maximum value of N is 8 or 16.

17. The TCI processing method according to claim 16, wherein an occurrence sequence of the indication information in the N consecutive spare bits in the MAC CE is consistent with an occurrence sequence of a corresponding uplink TCI codepoint, downlink TCI codepoint or joint TCI codepoint, and the indication information is used to indicate that a state of the TCI codepoint corresponding to the indication information is an activated state or a deactivated state.

18. The TCI processing method according to any one of claims 11 to 17, wherein a value of the indication information for activation is different from a value of the indication information for deactivation.

19. The TCI processing method according to any one of claims 11 to 18, wherein the predefined MAC CE comprises:
a subheader of the MAC CE indicating that a length of the MAC CE is a predefined length, and the length of the MAC CE correspondingly being the predefined length.

20. The TCI processing method according to claim 19, wherein the predefined length is 2 octets or 1 octet.

21. The TCI processing method according to any one of claims 11 to 20, wherein when the MAC CE only comprises identification information of a logical channel, the MAC CE is configured to deactivate a TCI of the candidate cell corresponding to the identification information of the logical channel.

22. The TCI processing method according to any one of claims 11 to 21, wherein when carrying the cell identification information of the at least one candidate cell, the MAC CE further comprises at least one of the following:
at least one TCI codepoint corresponding to cell identification information of each candidate cell, wherein one TCI codepoint corresponds to information of one uplink TCI state identifier, information of one downlink TCI state identifier, or information of one joint TCI state identifier;
information of a TCI state identifier corresponding to a TCI codepoint carried in an independent control field, wherein the information of a state identifier indicates a number of TCIs corresponding to the TCI codepoint or a TCI mode corresponding to the TCI codepoint, and the TCI mode comprises a joint uplink-downlink mode or a separate uplink-downlink mode;
information of a TCI state identifier corresponding to a TCI codepoint carried in an independent indication field when a state of an uplink TCI and a state of a downlink TCI are separately indicated, wherein the information of a state identifier is information of an uplink TCI state identifier or information of a downlink TCI state identifier.

23. The TCI processing method according to claim 22, wherein a state of a TCI corresponding to cell identification information carried in an MAC CE received at a first time is an activated state, and the first time is a latest time at which the MAC CE is received.

24. The TCI processing method according to claim 23, wherein if an MAC CE is received at a second time, and cell identification information carried in the MAC CE is not comprised in the cell identification information carried in the MAC CE received at the first time, then a state of a TCI corresponding to the cell identification information carried in the MAC CE received at the second time is a deactivated state, wherein the second time is earlier than the first time;
and/or,
if cell identification information carried in an MAC CE received at a second time is identical to the cell identification information carried in the MAC CE received at the first time, and TCIs corresponding to the same cell identification information are identical, then a state of the same TCIs corresponding to the same cell identification information is an activated state.

25. A TCI processing apparatus, applied to a network device, wherein the TCI processing apparatus comprises:
a sending module, configured to send a MAC CE to a terminal device, wherein the MAC CE is configured to explicitly or implicitly activate or deactivate a TCI of a candidate cell;
wherein an explicit manner adopted comprises:
the MAC CE carrying indication information for activating or deactivating a TCI of a target candidate cell;
an implicit manner adopted comprises:
activation or deactivation of a TCI of a target candidate cell according to a predefined MAC CE; or,
the MAC CE carrying cell identification information of at least one candidate cell to activate a TCI of the at least one candidate cell.

26. A TCI processing apparatus, applied to a terminal device, wherein the TCI processing apparatus comprises:
a receiving module, configured to receive a MAC CE from a network device, wherein the MAC CE is configured to explicitly or implicitly activate or deactivate a TCI of a candidate cell;
a processing module, configured to perform activation or deactivation of the TCI of the candidate cell according to the MAC CE;
wherein an explicit manner adopted comprises:
the MAC CE carrying indication information for activating or deactivating a TCI of a target candidate cell;
an implicit manner adopted comprises:
activation or deactivation of a TCI of a target candidate cell according to a predefined MAC CE; or,
the MAC CE carrying cell identification information of at least one candidate cell to activate a TCI of the at least one candidate cell.

27. A TCI processing device, comprising a memory, a transceiver and a processor;
the memory, configured to store a computer program;
the transceiver, configured to transceive data under the control of the processor;
the processor, configured to read the computer program in the memory and perform the following operation:
send a MAC CE to a terminal device, wherein the MAC CE is configured to explicitly or implicitly activate or deactivate a TCI of a candidate cell;
wherein an explicit manner adopted comprises:
the MAC CE carrying indication information for activating or deactivating a TCI of a target candidate cell;
an implicit manner adopted comprises:
activation or deactivation of a TCI of a target candidate cell according to a predefined MAC CE; or,
the MAC CE carrying cell identification information of at least one candidate cell to activate a TCI of the at least one candidate cell.

28. The TCI processing device according to claim 27, wherein when the MAC CE does not comprise information of a TCI state identifier, the MAC CE is configured to deactivate all TCIs for the target candidate cell in the MAC CE.

29. The TCI processing device according to claim 28, wherein the indication information corresponds to the target candidate cell, and the indication information is used to indicate activation or deactivation of all TCIs for the target candidate cell in the MAC CE; or,
the indication information corresponds to a TCI codepoint, and the indication information is used to indicate that a state of the TCI codepoint corresponding to the indication information is an activated state or a deactivated state.

30. The TCI processing device according to claim 29, wherein when the indication information corresponds to the target candidate cell, the indication information is carried in a spare bit of the MAC CE;
when the indication information corresponds to the TCI codepoint, the indication information is carried in N consecutive spare bits in the MAC CE, and a value of N depends on a number of TCI codepoints indicated in the MAC CE.

31. The TCI processing device according to claim 30, wherein types of the TCI codepoint comprise an uplink TCI codepoint, a downlink TCI codepoint or a joint TCI codepoint.

32. The TCI processing device according to claim 31, wherein an occurrence sequence of the indication information in the N consecutive spare bits in the MAC CE is consistent with an occurrence sequence of a corresponding uplink TCI codepoint, downlink TCI codepoint or joint TCI codepoint.

33. The TCI processing device according to any one of claims 27 to 32, wherein a value of the indication information for activation is different from a value of the indication information for deactivation.

34. The TCI processing device according to any one of claims 27 to 33, wherein the predefined MAC CE comprises:
a subheader of the MAC CE indicating that a length of the MAC CE is a predefined length, and the length of the MAC CE correspondingly being the predefined length.

35. The TCI processing device according to claim 34, wherein the predefined length is 2 octets or 1 octet.

36. The TCI processing device according to any one of claims 27 to 35, wherein when carrying the cell identification information of the at least one candidate cell, the MAC CE further comprises at least one of the following:
at least one TCI codepoint corresponding to cell identification information of each candidate cell, wherein one TCI codepoint corresponds to information of one uplink TCI state identifier, information of one downlink TCI state identifier, or information of one joint TCI state identifier;
information of a TCI state identifier corresponding to a TCI codepoint carried in an independent control field, wherein the information of a state identifier indicates a number of TCIs corresponding to the TCI codepoint or a TCI mode corresponding to the TCI codepoint, and the TCI mode comprises a joint uplink-downlink mode or a separate uplink-downlink mode;
information of a TCI state identifier corresponding to a TCI codepoint carried in an independent indication field when a state of an uplink TCI and a state of a downlink TCI are separately indicated, wherein the information of a state identifier is information of an uplink TCI state identifier or information of a downlink TCI state identifier.

37. A TCI processing device, comprising a memory, a transceiver and a processor;
the memory, configured to store a computer program;
the transceiver, configured to transceive data under the control of the processor;
the processor, configured to read the computer program in the memory and perform the following operations:
receive a MAC CE from a network device, wherein the MAC CE is configured to explicitly or implicitly activate or deactivate a TCI of a candidate cell;
perform activation or deactivation of the TCI of the candidate cell according to the MAC CE;
wherein an explicit manner adopted comprises:
the MAC CE carrying indication information for activating or deactivating a TCI of a target candidate cell;
an implicit manner adopted comprises:
activation or deactivation of a TCI of a target candidate cell according to a predefined MAC CE; or,
the MAC CE carrying cell identification information of at least one candidate cell to activate a TCI of the at least one candidate cell.

38. The TCI processing device according to claim 37, wherein when the MAC CE does not comprise information of a TCI state identifier, the MAC CE is configured to deactivate all TCIs for the target candidate cell in the MAC CE.

39. The TCI processing device according to claim 38, wherein the indication information corresponds to the target candidate cell, and the indication information is used to indicate activation or deactivation of all TCIs for the target candidate cell in the MAC CE, or the indication information is used to indicate activation or deactivation of a TCI corresponding to TCI identification information carried in the MAC CE for the target candidate cell.

40. The TCI processing device according to claim 37 or 39, wherein the indication information corresponds to a TCI codepoint, and the indication information is used to indicate activation or deactivation of a TCI corresponding to the TCI codepoint.

41. The TCI processing device according to claim 40, wherein types of the TCI codepoint comprise an uplink TCI codepoint, a downlink TCI codepoint or a joint TCI codepoint.

42. The TCI processing device according to claim 41, wherein when the indication information corresponds to the TCI codepoint, the indication information is carried in N consecutive spare bits in the MAC CE;
wherein a value of N depends on a number of TCI codepoints indicated in the MAC CE; or
a maximum value of N is 8 or 16.

43. The TCI processing device according to claim 42, wherein an occurrence sequence of the indication information in the N consecutive spare bits in the MAC CE is consistent with an occurrence sequence of a corresponding uplink TCI codepoint, downlink TCI codepoint or joint TCI codepoint, and the indication information is used to indicate that a state of the TCI codepoint corresponding to the indication information is an activated state or a deactivated state.

44. The TCI processing device according to any one of claims 37 to 43, wherein a value of the indication information for activation is different from a value of the indication information for deactivation.

45. The TCI processing device according to any one of claims 37 to 44, wherein the predefined MAC CE comprises:
a subheader of the MAC CE indicating that a length of the MAC CE is a predefined length, and the length of the MAC CE correspondingly being the predefined length.

46. The TCI processing device according to claim 45, wherein the predefined length is 2 octets or 1 octet.

47. The TCI processing device according to any one of claims 37 to 46, wherein when the MAC CE only comprises identification information of a logical channel, the MAC CE is configured to deactivate a TCI of the candidate cell corresponding to the identification information of the logical channel.

48. The TCI processing device according to any one of claims 37 to 47, wherein when carrying the cell identification information of the at least one candidate cell, the MAC CE further comprises at least one of the following:
at least one TCI codepoint corresponding to cell identification information of each candidate cell, wherein one TCI codepoint corresponds to information of one uplink TCI state identifier, information of one downlink TCI state identifier, or information of one joint TCI state identifier;
information of a TCI state identifier corresponding to a TCI codepoint carried in an independent control field, wherein the information of a state identifier indicates a number of TCIs corresponding to the TCI codepoint or a TCI mode corresponding to the TCI codepoint, and the TCI mode comprises a joint uplink-downlink mode or a separate uplink-downlink mode;
information of a TCI state identifier corresponding to a TCI codepoint carried in an independent indication field when a state of an uplink TCI and a state of a downlink TCI are separately indicated, wherein the information of a state identifier is information of an uplink TCI state identifier or information of a downlink TCI state identifier.

49. The TCI processing device according to claim 48, wherein a state of a TCI corresponding to cell identification information carried in an MAC CE received at a first time is an activated state, and the first time is a latest time at which the MAC CE is received.

50. The TCI processing device according to claim 49, wherein if an MAC CE is received at a second time, and cell identification information carried in the MAC CE is not comprised in the cell identification information carried in the MAC CE received at the first time, then a state of a TCI corresponding to the cell identification information carried in the MAC CE received at the second time is a deactivated state, wherein the second time is earlier than the first time;
and/or,
if cell identification information carried in an MAC CE received at a second time is identical to the cell identification information carried in the MAC CE received at the first time, and TCIs corresponding to the same cell identification information are identical, then a state of the same TCIs corresponding to the same cell identification information is an activated state.

51. A non-transitory readable storage medium storing a computer program, wherein the computer program enables a processor to implement the method according to any one of claims 1 to 24.
